(19) Europäisches Patentamt
European Patent Office
Office européen des brevets

(11) **EP 4 156 347 A1**

(12) **EUROPÄISCHE PATENTANMELDUNG**

(43) Veröffentlichungstag:
**29.03.2023   Patentblatt 2023/13**

(21) Anmeldenummer: **22194470.5**

(22) Anmeldetag: **07.09.2022**

(51) Internationale Patentklassifikation (IPC):
***H01M 8/0228*** (2016.01)    ***B23K 26/0622*** (2014.01)
***B23K 26/352*** (2014.01)

(52) Gemeinsame Patentklassifikation (CPC):
**H01M 8/0228; B23K 26/0624; B23K 26/355**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **09.09.2021   DE 102021209997**

(71) Anmelder: **REINZ-Dichtungs-GmbH**
**89233 Neu-Ulm (DE)**

(72) Erfinder:
• **Gallmeier, Edda**
**89233 Neu-Ulm (DE)**

• **Gaugler, Bernd**
**89073 Ulm (DE)**
• **Scheeler, Sebastian**
**70182 Stuttgart (DE)**
• **Wenzel, Stephan**
**89284 Pfaffenhofen (DE)**
• **Jerg, Lisa**
**89233 Neu-Ulm (DE)**

(74) Vertreter: **Pfenning, Meinig & Partner mbB**
**Patent- und Rechtsanwälte**
**Theresienhöhe 11a**
**80339 München (DE)**

(54) **LASEROBERFLÄCHENBEHANDELTE SEPARATORPLATTE SOWIE VERFAHREN ZUR HERSTELLUNG UND VERFAHREN ZUR CHARAKTERISIERUNG DERSELBEN**

(57)    Die Erfindung betrifft unter anderem eine metallische Separatorplatte (2a, 2b) für ein elektrochemisches System (1), aufweisend zumindest einen ersten laseroberflächenbehandelten Bereich (50) mit einer ersten Passivierungsschicht (52) und einen zweiten Bereich (54) mit einer nativen Passivierungsschicht (56), wobei die erste Passivierungsschicht (52) in Bezug auf die native Passivierungsschicht (56) infolge der Laseroberflächenbehandlung
- eine um mindestens 10% erhöhte Ladungsträgerdichte und
- einen um höchstens 5 % größeren Oberflächeninhalt aufweist.

Weiter betrifft die Erfindung Verfahren zur Herstellung und Charakterisierung einer derartigen Separatorplatte.

Fig. 1

EP 4 156 347 A1

**Beschreibung**

Die Erfindung betrifft eine laseroberflächenbehandelte Separatorplatte für ein elektrochemisches System sowie Verfahren zur Herstellung und Charakterisierung einer derartigen Separatorplatte. Das elektrochemische System kann insbesondere ein Brennstoffzellensystem, ein elektrochemischer Kompressor, ein Elektrolyseur oder eine Redox-Flow-Batterie sein.

Separatorplatten können in elektrochemischen Systemen verschiedene Funktionen haben. Sie können einerseits zur Gewährleistung einer elektrisch leitenden Verbindung zu einer angrenzenden Schicht dienen, bei der es sich beispielsweise um eine Gasdiffusionslage handeln kann. Andererseits dienen Separatorplatten typischerweise zum Zu- und/oder Abtransport von Reaktanden und/oder Reaktionsprodukten, wobei für diesen Transport in der Regel eine Kanalstruktur vorgesehen ist. Außerdem kann mithilfe der Separatorplatten Reaktionswärme abtransportiert werden, beispielsweise mittels eines Kühlmittels. Insbesondere für mobile Anwendungen, wie in Kraftfahrzeugen, kann eine Herstellung von Separatorplatten aus Metall erwünscht sein, weil die verglichen mit anderen Werkstoffen größere mechanische Stabilität von Metall eine kompaktere Bauweise von Brennstoffzellen und Brennstoffzellenstapeln ermöglicht.

Ein Problem ergibt sich dabei jedoch dadurch, dass unter wirtschaftlichen Gesichtspunkten in Frage kommende Metalle, die hinreichend korrosionsbeständig sind, um den in Brennstoffzellen üblicherweise herrschenden aggressiven Bedingungen standzuhalten, zu Passivierung neigen. So bildet beispielsweise Edelstahl eine Passivierungsschicht aus Chromoxid, wodurch sich erst seine Korrosionsbeständigkeit ergibt. Eine Passivierungsschicht aber führt zu einem erheblich erhöhten elektrischen Kontaktwiderstand an einer Kontaktfläche, wodurch die Funktion einer Separatorplatte, eine verlustarme elektrische Verbindung herzustellen, über ein vertretbares Maß beeinträchtigt würde. Die genannten aggressiven Reaktionsbedingungen wirken sich außerdem negativ auf die Lebensdauer der Separatorplatten aus.

Es gibt also einen stetigen Bedarf, Separatorplatten hinsichtlich ihrer Korrosionsbeständigkeit, ihres elektrischen Kontaktwiderstands, ihrer Herstellungskosten und/oder ihrer Lebensdauer zu verbessern.

Es ist daher Aufgabe der vorliegenden Erfindung, eine Separatorplatte anzugeben, die zumindest eines der genannten Probleme löst. Der Erfindung liegt ferner die Aufgabe zugrunde, ein Verfahren anzugeben, mit dem eine derartige Separatorplatte hergestellt bzw. charakterisiert werden kann.

Diese Aufgabe wird durch die Separatorplatten gemäß den unabhängigen Patentansprüchen sowie die Verfahren zur Herstellung einer Separatorplatte gemäß dem Nebenanspruch gelöst. Außerdem werden Verfahren zur Charakterisierung einer Separatorplatte vorgestellt. Vorteilhafte Ausgestaltungen der Erfindung ergeben sich mit den Merkmalen der Unteransprüche und der nachstehenden Beschreibung.

Gemäß einem ersten Aspekt wird eine metallische Separatorplatte für ein elektrochemisches System bereitgestellt. Die Separatorplatte weist zumindest einen ersten laseroberflächenbehandelten Bereich mit einer ersten Passivierungsschicht und einen zweiten Bereich mit einer nativen Passivierungsschicht auf, wobei die erste Passivierungsschicht in Bezug auf die native Passivierungsschicht infolge der Laseroberflächenbehandlung

- eine um mindestens 10% erhöhte Ladungsträgerdichte und
- einen um höchstens 5 % größeren Oberflächeninhalt

aufweist.

Gemäß einem zweiten Aspekt wird ebenfalls eine metallische Separatorplatte für ein elektrochemisches System bereitgestellt. Diese Separatorplatte weist ebenfalls zumindest einen ersten laseroberflächenbehandelten Bereich mit einer ersten Passivierungsschicht mit einer erhöhten Ladungsträgerdichte infolge der Laserbehandlung der Oberfläche auf. Auch wenn zum Beispiel die gesamte Oberfläche der Separatorplatte eine entsprechende Laserbehandlung der Oberfläche erfahren hat, lässt sich diese Laseroberflächenbehandlung nachweisen. Hierzu wird in einem Abschnitt die erste Passivierungsschicht zumindest überwiegend abgetragen und anschließend wieder aufgebaut. Die Ladungsträgerdichte wird sowohl vor Abtrag als auch nach Wiederaufbau bestimmt, insbesondere mittels einer Mott-Schottky-Analyse. Die Separatorplatte weist eine erste Passivierungsschicht auf, welche infolge einer Laseroberflächenbehandlung der Separatorplatte eine um mindestens 10% erhöhte Ladungsträgerdichte und einen um höchstens 5 % größeren Oberflächeninhalt in Bezug auf die wiederaufgebaute Passivierungsschicht aufweist.

Die metallische Separatorplatte kann somit vollflächig oder abschnittsweise die erste Passivierungsschicht aufweisen, wobei die erste Passivierungsschicht durch Vergleich mit einer nativen Passivierungsschicht oder einer wiederaufgebauten Passivierungsschicht nachweisbar ist.

Die nachstehenden Ausführungsformen und Merkmale der Separatorplatte können sich auf die Separatorplatte gemäß dem ersten Aspekt und gemäß dem zweiten Aspekt beziehen, sofern nichts anders angegeben ist oder ersichtlich ist, dass lediglich eine bestimmte Separatorplatte gemäß einem der beiden Aspekte gemeint ist.

Die Erfinder haben überraschenderweise herausgefunden, dass die Oberfläche der Separatorplatte infolge der Laseroberflächenbehandlung strukturell dermaßen geändert wird, dass sich die Ladungsträgerdichte in der Passivierungsschicht durch die Laseroberflächenbehandlung erhöht. Die Änderung der Oberfläche schließt eine Umlagerung und/oder einen teilweisen Abtrag und/oder chemische Modifikationen des Oberflächenmaterials ein. Hierbei erfolgt die Laseroberflächenbehandlung derart, dass der Oberflächeninhalt des laseroberflächenbehandelten Bereichs sich nicht wesentlich ändert, nämlich um höchstens 5%, in Bezug auf den Oberflächeninhalt der nativen Passivierungsschicht oder der wiederaufgebauten Passivierungsschicht. Die Laseroberflächenbehandlung erhöht somit nicht die Rauigkeit der Oberfläche, sondern geht sogar manchmal eher mit einer Glättung der Oberfläche einher. Zum Vergleich der Oberflächeninhalte der beiden Passivierungsschichten sollten die untersuchten Probenabschnitte der Passivierungsschichten eine gleiche Grundfläche haben. Die Grundfläche kann hierbei als Projektion, insbesondere Orthogonalprojektion, des jeweiligen Probenabschnitts auf eine Plattenebene der Separatorplatte definiert werden.

Vorzugsweise weist die Separatorplatte eine erste Passivierungsschicht auf, welche infolge einer Laseroberflächenbehandlung der Separatorplatte eine um mindestens 25 %, insbesondere um mindestens 50 % erhöhte Ladungsträgerdichte und dennoch nur einen um höchstens 5 % größeren Oberflächeninhalt in Bezug auf die native oder die wiederaufgebaute Passivierungsschicht aufweist.

Ein Bereich der Separatorplatte, welcher keine Laseroberflächenbehandlung erfahren hat, umfasst die oben genannte native Passivierungsschicht. Die native Passivierungsschicht kann als spontane Passivierungsschicht aufgefasst werden, welche dadurch entsteht, dass das blanke Metall der Separatorplatte oder des Metallblechs, aus dem die Separatorplatte hergestellt wird, mit Sauerstoff und/oder Feuchtigkeit aus der Umgebungsluft reagiert. Üblicherweise ist eine sich über die gesamte Fläche der Separatorplatte erstreckende native Passivierungsschicht bereits auf dem Metall vorhanden, bevor die Separatorplatte aus dem Metallblech endgültig geformt wird. Die Laseroberflächenbehandlung erfolgt somit typischerweise auf der nativen Passivierungsschicht, wodurch die elektrochemischen und physikalischen Eigenschaften der nativen Passivierungsschicht geändert werden.

Je nach Anwendungsgebiet erstreckt sich die erste Passivierungsschicht vollflächig über eine gesamte Oberfläche der Separatorplatte oder lediglich bereichsweise, d.h. in dem ersten Bereich. In manchen Ausführungsformen grenzt der zweite Bereich mit der nativen Passivierungsschicht an den ersten Bereich mit der ersten Passivierungsschicht an. Alternativ können der erste Bereich und der zweite Bereich auch voneinander getrennte Bereiche der Separatorplatte sein.

Falls die gesamte Separatorplatte der Laseroberflächenbehandlung unterzogen wurde, kann die erste Passivierungsschicht zumindest in einem Bereich abgetragen, z.B. elektrochemisch, und anschließend wiederaufgebaut werden, z.B. durch eine Säure. Die wiederaufgebaute Passivierungsschicht hat dann ähnlich wie die native Passivierungsschicht ebenfalls eine kleinere Ladungsträgerdichte als die erste Passivierungsschicht. Insgesamt kann also in den laseroberflächenbehandelten Bereichen bei Anlegen einer Spannung eine höhere Stromdichte gemessen werden als außerhalb der laseroberflächenbehandelten Bereiche. Die Messung der Stromdichte kann zum Beispiel mittels C-AFM (conductive atomic field microscopy) erfolgen.

Theoretisch wäre auch denkbar, dass die erste Passivierungsschicht der Separatorplatte mit einer nativen Passivierungsschicht einer weiteren unbehandelten Separatorplatte, zum Beispiel aus derselben Charge, verglichen wird, um feststellen zu können, dass die Separatorplatte die erste Passivierungsschicht aufweist. Die Messgenauigkeit ist jedoch oftmals höher, wenn Bereiche derselben Separatorplatte miteinander verglichen werden. Aus diesem Grund wird die erste Passivierungsschicht nach Messung der Ladungsträgerdichte und des Oberflächeninhalts abgetragen, wobei in diesem Bereich die wiederaufgebaute Passivierungsschicht ausgebildet wird. Prinzipiell könnte in diesem Bereich eine native Passivierungsschicht entstehen, welche hinsichtlich ihrer Ladungsträgerdichte und ihres Oberflächeninhaltes mit der ersten Passivierungsschicht verglichen werden kann. Der natürliche Aufbau der nativen Passivierungsschicht verläuft in der Regel jedoch relativ langsam. Es ist deshalb vorteilhaft, wenn eine beschleunigte Passivierung des Metalls mittels eines zugefügten Reaktionsmittels oder Oxidationsmittels wie einer Säure stattfindet, um die wiederaufgebaute Passivierungsschicht zu bilden. Danach werden die Ladungsträgerdichte und der Oberflächeninhalt im Bereich der wiederaufgebauten Passivierungsschicht gemessen.

Die jeweilige Passivierungsschicht (erste, native oder wiederaufgebaute) weist typischerweise Metalloxid und/oder Metallhydroxid auf. Es kann vorgesehen sein, dass die erste Passivierungsschicht einen höheren Anteil an Metalloxid oder Metallhydroxid aufweist als die native Passivierungsschicht oder die wiederaufgebaute Passivierungsschicht. Die Oberflächenstruktur kann also, verglichen mit dem Material vor der Laserbestrahlung bzw. verglichen mit Material in nicht oberflächenstrukturierten Bereichen einen erhöhten Sauerstoffanteil bzw. Hydroxidanteil aufweisen. Dies kann beispielsweise auf den Energieeintrag während der Bestrahlung zurückgehen.

Generell kann die jeweilige Passivierungsschicht als Halbleiterschicht aufgefasst werden, welche üblicherweise eine Dotierung aufweist. Die Dotierung umfasst Fremdatome oder Störstellen im Halbleitermaterial und verändert die Eigenschaften des Halbleiters, d. h. das Verhalten der Elektronen und damit die elektrische Leitfähigkeit bzw. die Ladungsträgerdichte. Dabei kann bereits eine geringfügige Fremdatomdichte oder Störstellendichte die Ladungsträgerdichte sprunghaft erhöhen und damit eine sehr große Änderung der elektrischen Leitfähigkeit bewirken. Manchmal weist die erste Passivierungsschicht eine größere Dichte an Gitterdefekten, N-Ladungsträgern und/oder P-Ladungsträgern als die native Passivierungsschicht oder die wiederaufgebaute Passivierungsschicht auf. Nach üblicher Konvention sind bei der P-Dotierung Elektronen-Akzeptoren vorhanden, während bei der N-Dotierung ElektronenDonatoren vorhanden sind. Es können auch Mischformen auftreten, in denen sowohl P-Ladungsträger als auch N-Ladungsträger vorhanden sind. So hat Edelstahl typischerweise eine Passivierungsschicht mit beiden Ladungsträgertypen.

Die erhöhte Ladungsträgerdichte in der ersten Passivierungsschicht kann - trotz eines eventuell höheren vorhandenen Sauerstoffanteils in der ersten Passivierungsschicht - zu einer Verringerung des elektrischen Kontaktwiderstandes bzw. zu einer Steigerung der elektrischen Leitfähigkeit, insbesondere im Vergleich zu der nativen Passivierungsschicht und der wiederaufgebauten Passivierungsschicht, führen. Die Separatorplatte kann somit im Bereich der ersten Passivierungsschicht eine größere elektrische Leitfähigkeit bzw. einen niedrigeren elektrischen Widerstand aufweisen als außerhalb der ersten Passivierungsschicht, also in der nativen Passivierungsschicht oder der wiederaufgebauten Passivierungsschicht.

Die Bestimmung der Ladungsträgerdichte kann unter Berücksichtigung einer Mott-Schottky-Analyse bzw. eines Mott-Schottky-Plotts erfolgen. Mit der Mott-Schottky-Analyse werden generell Veränderungen gemessen, die an einer elektrochemischen Grenzfläche auftreten, wenn eine angelegte Gleichspannung schrittweise geändert wird. Eine elektrochemische Zelle wird mit einem Wechselspannungspotential mit fester Frequenz und kleinen Signalen angeregt. Die Impedanz der Grenzfläche zwischen Arbeitselektrode und Elektrode wird als Funktion der Gleichspannung gemessen. Mittels der Mott-Schottky-Gleichung

$$(1) \qquad \frac{1}{C^2} = \left( \frac{2}{\varepsilon_0 \varepsilon_r e_0 N} \right) \left( E - \frac{kT}{e_0} \right)$$

kann wegen des linearen Zusammenhangs von $C^{-2}$ und E eine Gerade mit dem Mott-Schottky-Plot erhalten werden. Durch Analyse des Anstiegs m der Gerade

$$(2) \qquad m = \frac{2}{\varepsilon_0 \varepsilon_r e_0 \cdot N}$$

kann dann die Ladungsträgerdichte N bestimmt werden. Hierbei sind in den obigen Gleichungen (1) und (2) C die Kapazität, E das Potenzial, k die Boltzmann-Konstante, T die Temperatur, eo die Elementarladung, $\varepsilon = \varepsilon_0{}^*\varepsilon_r$ die Dieelektrizitätskonstante, und N die zu bestimmende Ladungsträgerdichte.

Diese Art der Bestimmung ist dem Fachmann auf dem Gebiet der Elektrochemie geläufig und ist zum Beispiel in der Veröffentlichung Schmickler, Wolfgang, Santos, Elizabeth " Interfacial Electrochemistry", Springer, 2010 beschrieben.

In manchen Ausführungsformen kann vorgesehen sein, dass für die Bestimmung der erhöhten Ladungsträgerdichte der ersten Passivierungsschicht

- die Ladungsträgerdichte der ersten Passivierungsschicht bestimmt wird, insbesondere mittels einer Mott-Schottky-Analyse,
- die erste Passivierungsschicht zumindest in einem Abschnitt zumindest überwiegend abgetragen wird,
- eine Passivierungsschicht in diesem Abschnitt wiederaufgebaut wird und
- die Ladungsträgerdichte der wiederaufgebauten Passivierungsschicht bestimmt wird, insbesondere mittels einer Mott-Schottky-Analyse.

In der Regel umfasst die metallische Separatorplatte einen Grundkörper, welcher aus Metall gefertigt ist. So kann die Separatorplatte aus einem Metallblech gefertigt sein. Als Metall für die Separatorplatte bzw. den Grundkörper kommt zum Beispiel Edelstahl in Frage.

Die in dieser Schrift genannten Passivierungsschichten (erste, native und/oder wiederaufgebaute) haben in der Regel eine Dicke von < 10 nm.

Im laseroberflächenbehandelten Bereich kann die Separatorplatte periodische Oberflächenstrukturen mit einer mittleren räumlichen Periode von kleiner als 10 $\mu$m aufweisen. Die periodischen Oberflächenstrukturen sind hierbei durch die Laseroberflächenbehandlung entstanden. Die erste Passivierungsschicht kann zumindest ein Teil der Oberflächenstrukturen sein. Die Oberflächenstrukturen können auch noch eine unmittelbar unter der ersten Passivierungsschicht liegende Materialschicht umfassen, welche aus dem Metall der Separatorplatte besteht. Vorzugsweise beträgt die mittlere räumliche Periode maximal 2 $\mu$m, insbesondere maximal 1,5 $\mu$m.

Üblicherweise sind die Oberflächenstrukturen zumindest in einer Raumrichtung periodisch zueinander angeordnet. Die Oberflächenstrukturen können auch in zwei Raumrichtungen periodisch zueinander angeordnet sein. Gemäß manchen Ausführungsformen sind die Oberflächenstrukturen zumindest abschnittsweise parallel nebeneinander und/oder parallel hintereinander angeordnet. Die Ausrichtung kann dabei über größere oder kleinere Bereiche gegeben sein. Vorzugsweise verlaufen zumindest innerhalb eines von einer Korngrenze umschlossenen Bereichs die Oberflächenstrukturen parallel zueinander. Es können auch verschiedene Bereiche mit parallelen Oberflächenstrukturen, in denen aber eine unterschiedliche Orientierung verglichen mit einem anderen Bereich gegeben ist, aneinander grenzen, beispielsweise an Korngrenzen.

Somit wiederholt sich die Form der Strukturen auf der Oberfläche in zumindest einer Raumrichtung. Die räumliche Periode bezeichnet hierbei typischerweise den maximalen Abstand zwischen zwei benachbarten, formgleichen oder formähnlichen Oberflächenstrukturen. Herstellungsbedingt sind die Oberflächenstrukturen in der Regel nicht komplett identisch zueinander. Vielmehr kann die Periode entlang der Oberfläche Schwankungen unterliegen. Daher wird eine mittlere räumliche Periode angegeben, die kleiner als 10 $\mu$m ist. Es kann auch vorkommen, dass die räumliche Periode der Oberflächenstrukturen in jedem Fall kleiner als 10 $\mu$m ist. Die räumliche Periode der Oberflächenstrukturen hängt insbesondere direkt von der Wellenlänge des verwendeten Laserlichts ab und liegt üblicherweise in der Größenordnung der Wellenlänge des verwendeten Laserlichts.

Derartige periodische Oberflächenstrukturen werden typischerweise mittels Laserstrahlung eines Ultrakurzpulslasers erzeugt (s. unten) und sind in der Literatur auch als "Laser-induced Periodic Surface Structures" (LIPSS) bekannt. Für ausführliche Erklärungen, Details und Definitionen zum Thema LIPSS wird auf die folgende Veröffentlichung verwiesen:

"Dynamik der Erzeugung und Mechanismen der Entstehung von periodischen Oberflächenstrukturen im Nanometerbereich (LIPSS) durch die Bestrahlung von Festkörpern mit Femtosekunden-Laserpulsen", Dissertation von Sandra Höhm, Berlin, 2014 (nachstehend: Höhm 2014),

welche mittels Referenzierens vollumfänglich zum Teil dieser Offenbarung gemacht wird.

Die Erfinder haben festgestellt, dass sich die genannten Oberflächenstrukturen für eine Nutzung in Separatorplatten eines elektrochemischen Systems besonders gut eignen. Durch die periodischen Oberflächenstrukturen können nämlich Oberflächeneigenschaften der Separatorplatte gezielt geändert werden. Beispielsweise können durch die Oberflächenstrukturen chemische und/oder elektrische Eigenschaften der Oberfläche beeinflusst und/oder verbessert werden. Insbesondere sorgen die periodischen Oberflächenstrukturen für die oben genannte erhöhte Ladungsträgerdichte von mindestens 10%.

Es hat sich herausgestellt, insbesondere durch AFM-Messungen oder REM-Messungen, dass die Erzeugung der periodischen Oberflächenstrukturen zu einer Glättung des Rohmaterials der Separatorplatte führt. Somit hat eine die periodischen Oberflächenstrukturen aufweisende Oberfläche einen um höchstens 5% größeren Oberflächeninhalt, einen im Wesentlichen gleichen Oberflächeninhalt, oder sogar einen kleineren Oberflächeninhalt, als ein Bereich mit gleicher Grundfläche, welcher die periodischen Oberflächenstrukturen nicht aufweist bzw. welcher keine Laseroberflächenbehandlung im Sinne dieser Schrift erfahren hat.

Die Oberflächenstrukturen können sich entlang ihrer Längsrichtung zum Beispiel wellenförmig oder linienförmig erstrecken. In einer Ausgestaltung können die Oberflächenstrukturen Vertiefungen und/oder Erhebungen aufweisen. Die Vertiefungen können zwischen den Erhebungen verlaufen und sind üblicherweise durch diese begrenzt und/oder gebildet. Die Vertiefungen bzw. Erhebungen können zumindest abschnittsweise im Wesentlichen parallel zueinander verlaufen (z.B. parallel nebeneinander oder hintereinander). Oftmals bilden die Oberflächenstrukturen zumindest lokal eine Grabenstruktur mit einer Vielzahl von länglichen Vertiefungen, welche im Wesentlichen parallel zueinander ausgerichtet sind. Die Anzahl der Oberflächenstrukturen, Vertiefungen bzw. Erhebungen kann hierbei nach Bedarf variiert werden. So kann die Anzahl der Vertiefungen von der Größe der Fläche abhängen, die die Oberflächenstrukturen aufweisen soll. Typischerweise sind in einem Bereich mit gleichartigen oder gleichen Oberflächenstrukturen mindestens 10 oder mindestens 20 Grabenstrukturen, beispielsweise Vertiefungen, die zumindest abschnittsweise parallel zueinander verlaufen, vorhanden. Ebenso ist es möglich, in unterschiedlichen Bereichen in mindestens einer Raumrichtung auf der Oberfläche eine unterschiedliche Anzahl Perioden auf eine bestimmte Länge vorzusehen. Werden die Oberflächenstrukturen im Bereich der Kanalstrukturen der Separatorplatten vorgesehen, können in den erhabenen Bereichen der Kanalstrukturen, beispielsweise den Stegen oder Abschnitten der Kanalseitenwände, beispielsweise eine andere Anzahl Perioden auf eine bestimmte Strecke in einer Raumrichtung vorgesehen sein als in den vertieften Bereichen der Kanalstrukturen, also insbesondere den Kanalböden und Abschnitten der Kanalseitenwände.

Die Abmessungen der Vertiefungen, insbesondere die Periode, hängen in der Regel zumindest von der Wellenlänge der verwendeten Laserstrahlung ab. Beispielsweise haben die Vertiefungen eine Tiefe von minimal 8 nm, bevorzugt minimal 20 nm, zum Beispiel minimal 50 nm und/oder maximal 3 $\mu$m, bevorzugt maximal 1 $\mu$m, insbesondere

maximal 500 nm, bevorzugt maximal 300 nm, in der Regel maximal 250 nm. Die Tiefe wird hierbei üblicherweise normal zur Fläche, die durch die Erhebungen gebildet wird, bzw. normal zur Oberfläche der Separatorplatte, die frei von den periodischen Oberflächenstrukturen ist, gemessen. Weiter können die Vertiefungen eine Breite von minimal 0,1 $\mu$m und/oder maximal 2 $\mu$m aufweisen. Die Breite wird hierbei typischerweise auf halber Höhe und senkrecht zur lokalen Längsrichtung der Vertiefungen gemessen. Die Vertiefungen können außerdem eine Periode in einer Raumrichtung von minimal 100 nm, üblicherweise minimal 0,3 $\mu$m und/oder maximal 3 $\mu$m, bevorzugt maximal 1,5 $\mu$m, insbesondere maximal 1,2 $\mu$m, insbesondere maximal 1000 nm, typischerweise maximal 700 nm aufweisen. Die periodischen Oberflächenstrukturen umfassen somit oftmals Nanostrukturen mit einer Tiefe, Breite und/oder Periode von jeweils unterhalb eines Mikrometers oder, insbesondere bzgl. der Periode etwas oberhalb eines Mikrometers.

Die Separatorplatte kann außerdem eine Beschichtung aufweisen, die sich vorzugsweise vom Material des Grundkörpers der Separatorplatte unterscheidet. Die Beschichtung kann z.B. bereichsweise oder vollflächig vorgesehen sein. Bei vollflächig beschichteten Ausgangsmaterialien ist es möglich, die Beschichtung abschnittsweise zu entfernen, um zumindest Bereiche der freigelegten Metalloberfläche einer Laseroberflächenbehandlung zu unterziehen.

Ebenso kann ein nicht laseroberflächenbehandelter Bereich zumindest abschnittsweise oder komplett mit einer Beschichtung versehen, beispielsweise auch zur Ausbildung eines Dichtelements oder zur Mikroabdichtung eines Dichtelements. Die Beschichtung kann einen oder mehrere folgender Stoffe enthalten oder aus einem oder mehreren dieser Stoffe oder deren Legierungen bestehen: Polymere, elektrisch leitfähige Oxide, Kohlenstoff, vorzugsweise elektrisch leitfähige Kohlenstoffschichten, Edelmetalle, wie Au, Ag oder Pt, Metalle, wie Ti oder Cr, Metallnitride, insbesondere TiN, CrN, $Cr_2N$, Metallcarbide, Metallboride, Metallsilicide und/oder Siliziumcarbid. Die elektrische Leitfähigkeit wird dabei nicht nur auf die Separatorplatten bezogen, sondern wird typischerweise anhand eines umfassenden Systems aus zwei miteinander verbundenen Separatorplatten und beidseitig an diesem Verbund angeordneten Gasdiffusionslagen bzw. -medien verglichen. Zu Testzwecken kann auch nur eine Blechlage, wie sie für eine Separatorplatte verwendet wird, in Kombination mit - üblicherweise beidseitig aufgebrachten - Gasdiffusionsmedien vermessen werden.

Die Separatorplatte weist in der Regel zwei gegenüberliegende Flachseiten auf. Die Laseroberflächenbehandlung, also die erste Passivierungsschicht, kann in bestimmten Ausführungsformen auf lediglich einer der Flachseiten oder auf beiden Flachseiten vorgesehen werden. In einer Ausgestaltung ist zumindest eine der Flachseiten vollflächig laseroberflächenbehandelt. In anderen Ausführungsformen weisen lediglich ein Bereich oder mehrere Bereiche der Separatorplatte die Laseroberflächenbehandlung bzw. die erste Passivierungsschicht auf. Es kann also mindestens ein Bereich vorhanden sein, welcher frei von der Laseroberflächenbehandlung ist. Die beiden Flachseiten der Separatorplatte können eine Reaktionsmittelseite bzw. Gasseite und eine Kühlmittelseite umfassen. Die erste Passivierungsschicht kann auf der Reaktionsmittelseite bzw. Gasseite der Separatorplatte angeordnet sein. Zusätzlich oder alternativ kann die erste Passivierungsschicht auf der Kühlmittelseite der Separatorplatte angeordnet sein.

Die Separatorplatte umfasst in der Regel ein Strömungsfeld zum Führen eines Reaktionsmediums entlang einer Flachseite der Separatorplatte. In einer Ausführungsform ist die erste Passivierungsschicht im Bereich des Strömungsfeldes vorgesehen. Gemäß einem Beispiel ist die erste Passivierungsschicht nur im Bereich des Strömungsfeldes vorgesehen, vorzugsweise lediglich in einem elektrochemisch aktiven Bereich des Strömungsfeldes. In einer bevorzugten Ausführungsform weist die Separatorplatte eine Vielzahl von Stegen und zwischen den Stegen ausgebildeten Kanälen auf. Die Stege und die Kanäle können insbesondere das Strömungsfeld zum Führen des Reaktionsmediums entlang einer der Flachseiten der Separatorplatte bilden. Typischerweise bilden die Stege eine Kontaktfläche insbesondere zum Anliegen an einer Diffusionslage. Vorzugsweise weisen zumindest die Stege die erste Passivierungsschicht auf. Die erste Passivierungsschicht kann auch außerhalb der Stege vorhanden sein, zum Beispiel im Bereich der Kanäle. Alternativ weisen lediglich die Stege die erste Passivierungsschicht auf, insbesondere im Bereich der genannten Kontaktfläche. Es hat sich herausgestellt, dass ein elektrischer Widerstand im Bereich der Kontaktfläche aufgrund der ersten Passivierungsschicht verringert sein kann. Mit anderen Worten kann der elektrische Widerstand im Bereich der Kontaktfläche zwischen Stegen und Diffusionslage größer sein, wenn keine erste Passivierungsschicht auf den Stegen gebildet ist.

Auch auf der gegenüberliegenden Oberfläche der Separatorplatte können auf der Rückseite von Kanälen Stege ausgebildet sein, im Folgenden als Rückseiten-Stege bezeichnet. Diese kommen im verbauten Zustand auf vergleichbaren Rückseiten-Stegen einer anderen Separatorplatte zu liegen. Auch hier hat sich herausgestellt, dass der elektrische Widerstand der Kontaktfläche aufgrund der Laseroberflächenbehandlung verringert sein kann.

Die partielle Laseroberflächenbehandlung in Form einer Behandlung nur der Stege und/oder Rückseiten-Stege kann sich im Wesentlichen über die gesamte Oberfläche des jeweiligen Steges bzw. Rückseiten-Steges erstrecken. Es ist aber ebenso möglich, nur Abschnitte eines Steges oder Rückseiten-Steges mittels Laser mit der ersten Passivierungsschicht zu versehen.

Außerdem kann mit der Erfindung eine Bipolarplatte für ein elektrochemisches System bereitgestellt werden, welche zwei der zuvor beschriebenen Separatorplatten enthält, die zusammengefügt sind und vorzugsweise gegenüber der Umgebung dicht verbunden, beispielsweise dicht verschweißt, sind. Die Stege der beiden Separatorplatten bilden dabei jeweils eine Kontaktfläche zum Anliegen an die Gasdiffusionslage aus. Auf den Rückseiten der Kanäle, d.h. auf den nach innen gewandten Oberflächen der Separatorplatten, bilden sich Rückseiten-Stege aus, wobei die beiden Separatorplatten im Bereich dieser Rückseiten-Stege typischerweise aufeinander aufliegen. Die Kontaktflächen, sowohl von einem Steg zu einer Gasdiffusionslage als auch an aneinander angrenzenden Rückseiten-Stegen können, wenn sie mit Laser behandelt wurden, im Bereich der ersten Passivierungsschicht einen geringeren elektrischen Widerstand aufweisen.

Die Bipolarplatte kann zum Führen eines Kühlmittels ausgebildet sein. Hierzu kann zumindest eine Separatorplatte eine Vielzahl von Kühlkanälen aufweisen, vorzugsweise auf einer dem Strömungsfeld eines Reaktionsmediums gegenüberliegenden Flachseite der Separatorplatte, also im Inneren der Bipolarplatte. Hierbei werden die beiden Separatorplatten üblicherweise nicht nur entlang und beabstandet zu ihrem Außenrand miteinander fluiddicht verbunden, sondern weisen zur Verbesserung der Leitfähigkeit stoffschlüssige Verbindungen, insbesondere Schweißverbindungen, im elektrochemisch aktiven Bereich des Strömungsfeldes, genauer in ihren Kontaktzonen, die von den Rückseiten-Stegen gebildet werden, auf. Es hat sich gezeigt, dass mittels der ersten Passivierungsschicht bzw. der Laseroberflächenbehandlung auch an dieser Grenzfläche der Widerstand reduziert werden kann. Somit ist es bevorzugt, wenn auch auf der Kühlmittelseite einer Separatorplatte vollflächig oder abschnittsweise, insbesondere im Bereich der Kontaktflächen zwischen den Separatorplatten, also insbesondere auf den vorgenannten Rückseiten-Stegen, die erste Passivierungsschicht vorhanden ist. Die erste Passivierungsschicht kann also auf einer oder beiden Oberflächen der Separatorplatte vorhanden sein, d.h. auf der Kühlmittel- und/oder auf der Reaktionsmittelseite.

Wie oben erwähnt kann die erste Passivierungsschicht zu einer erheblichen Verringerung des elektrischen Kontaktwiderstandes bzw. zu einer erheblichen Steigerung der elektrischen Leitfähigkeit führen. Durch diese Verbesserung der elektrischen Leitfähigkeit hat sich gezeigt, dass auf die stoffschlüssigen Verbindungen wie die genannten Schweißverbindungen in den Kontaktzonen sogar verzichtet werden kann. Somit kann die Bipolarplatte in einer Ausführungsform innerhalb des Strömungsfeldes bzw. innerhalb des elektrochemisch aktiven Bereichs auf der Kühlmittelseite und in den genannten Kontaktzonen der beiden Separatorplatten, wo die Oberflächenstrukturen angeordnet sind, frei von stoffschlüssigen Verbindungen wie Schweißverbindungen sein. Hierbei werden die Kontaktzonen üblicherweise durch die Rückseiten-Stege der Separatorplatten gebildet. Ebenso ist es möglich, gegenüber herkömmlichen Bipolarplatten die Anzahl bzw. Dichte der Verbindungsstellen, beispielsweise der Schweißverbindungen, auch nur zu reduzieren, beispielsweise in einem Maße, dass eine ausreichende mechanische Stabilität gegeben ist. Insbesondere können die Oberflächen der Kühlmittelseite auch frei von Beschichtungen zur Leitfähigkeitserhöhung sein.

Weiter kann mit der Erfindung ein elektrochemisches System mit einer Vielzahl derartiger Separatorplatten oder Bipolarplatten vorgeschlagen werden. Das elektrochemische System kann insbesondere ein Brennstoffzellensystem, ein elektrochemischer Kompressor, ein Elektrolyseur oder eine Redox-Flow-Batterie sein.

Bekannte elektrochemische Systeme der genannten Art umfassen normalerweise einen Stapel elektrochemischer Zellen, die jeweils durch Bipolarplatten voneinander getrennt sind. Solche Bipolarplatten können z. B. der elektrischen Kontaktierung der Elektroden der einzelnen elektrochemischen Zellen (z. B. Brennstoffzellen) und/oder der elektrischen Verbindung benachbarter Zellen dienen (Serienschaltung der Zellen). Typischerweise sind die Bipolarplatten aus zwei zusammengefügten Einzelplatten gebildet, die im Rahmen dieses Dokuments auch als Separatorplatten bezeichnet werden. Die Einzelplatten können stoffschlüssig zusammengefügt sein, z. B. durch eine oder mehrere Schweißverbindungen, insbesondere durch eine oder mehrere Laserschweißverbindungen.

Die Bipolarplatten bzw. die Separatorplatten können jeweils Strukturen aufweisen oder bilden, die z. B. zur Versorgung der zwischen benachbarten Bipolarplatten angeordneten elektrochemischen Zellen mit einem oder mehreren Medien und/oder zum Abtransport von Reaktionsprodukten eingerichtet sind. Bei den Medien kann es sich um Brennstoffe (z. B. Wasserstoff oder Methanol), Reaktionsgase (z. B. Luft oder Sauerstoff) oder um Kühlmittel handeln. Ferner können die Bipolarplatten zum Weiterleiten der bei der Umwandlung elektrischer bzw. chemischer Energie in der elektrochemischen Zelle entstehenden Abwärme sowie zum Abdichten der verschiedenen Medien- bzw. Kühlkanäle gegeneinander und/oder nach außen ausgebildet sein.

Ferner weisen die Bipolarplatten üblicherweise jeweils wenigstens eine Durchgangsöffnung auf, durch die hindurch die Medien und/oder die Reaktionsprodukte zu den zwischen benachbarten Bipolarplatten des Stapels angeordneten elektrochemischen Zellen geleitet oder von diesen weggeführt werden können. Die elektrochemischen Zellen umfassen typischerweise außerdem jeweils eine oder mehrere Membran-Elektrodeneinheiten (Membrane Electrode Assemblies bzw. MEA). Zusätzlich können Gasdiffusionslagen vorgesehen sein, die üblicherweise jeweils zwischen der MEA und der Bipolarplatte angeordnet und z. B. als Metall- oder Kohlenstoffvlies ausgebildet sind.

Mit der vorliegenden Schrift wird gemäß einem dritten Aspekt auch ein Verfahren zur Herstellung einer Separatorplatte für ein elektrochemisches System bereitgestellt. Das Verfahren umfasst die Schritte:

- Bereitstellen einer metallischen Separatorplatte,
- Bestrahlen zumindest eines ersten Bereichs der Separatorplatte mittels eines gepulsten Lasers, wobei eine Pulsdauer der Laserpulse kleiner als 100 ps, vorzugsweise kleiner als 50 ps ist,
- Bilden einer ersten Passivierungsschicht im ersten Bereich der Separatorplatte,

wobei die erste Passivierungsschicht in Bezug auf eine native oder wiederaufgebaute Passivierungsschicht

- eine um mindestens 10% erhöhte Ladungsträgerdichte und
- einen um höchstens 5 % größeren Oberflächeninhalt der beiden Bereiche

aufweist.

In der Regel wird eine bereits auf der Separatorplatte vorhandene Passivierungsschicht, etwa eine native Passivierungsschicht, durch die Laserstrahlung geändert, wodurch die erste Passivierungsschicht entsteht. Die erste Passivierungsschicht hat dann aufgrund der Laserstrahlung die geänderten Eigenschaften in Bezug auf die native Passivierungsschicht. Ebenso weist die erste Passivierungsschicht aufgrund der Laserstrahlung gegenüber einer nachträglich abgetragenen und dann wieder aufgebauten, aber nicht nochmals mittels Lasers bestrahlten Oberfläche die geänderten Eigenschaften auf.

Hierbei ist wichtig, dass die Laserpulse eine Pulsdauer von weniger als 100 ps, insbesondere weniger als 50 ps oder beispielsweise weniger als 20 ps aufweisen. Vorzugsweise haben die Laserpulse eine Pulsfrequenz von weniger als 1 MHz oder weniger als 800 kHz. Die Pulsfrequenz kann hierbei größer sein als 1 kHz, insbesondere größer als 10 kHz. Insbesondere ist es vorteilhaft, wenn das Verhältnis von Pulsfrequenz zu Pulsdauer mindestens 1000 beträgt. Durch diese kurze Pulsdauer und die verglichen damit niedrige Pulsfrequenz können zum einen sehr hohe Intensitäten erreicht werden, die für die Laserbehandlung der Oberfläche und/oder Umlagerung des Oberflächenmaterials und/oder Änderung der chemischen Zusammensetzung des Oberflächenmaterials benötigt wird. Zum anderen erlaubt die kurze Pulsdauer in Wechselwirkung mit den hohen Totzeiten eine weitgehend wärmediffusionsfreie Bearbeitung des Oberflächenmaterials und damit die Entstehung der ersten Passivierungsschicht.

In bevorzugten Ausführungsformen ist die Pulsdauer kleiner als 50 ps, kleiner als 20 ps, kleiner als 10 ps oder sogar kleiner als 1 ps. In manchen Ausführungsformen werden Pulsdauern im fs-Bereich verwendet, z.B. größer als 30 fs und/oder kleiner als 1000 fs und/oder kleiner als 500 fs, vorzugsweise größer als 50 fs und/oder größer als 100 fs. Insbesondere können für das Verfahren also Pikosekunden- oder Femtosekundenlaser verwendet werden, welche zusammenfassend als Ultrakurzpulslaser bezeichnet werden. Nanosekundenpulse mit einer Pulsdauer größer als 1 ns hingegen haben sich als ungeeignet für die Herstellung der oben beschriebenen Separatorplatte herausgestellt.

Typischerweise liegt eine Fluenz der Laserstrahlung in der Größenordnung der Ablationsschwelle des verwendeten Materials der Separatorplatte. Die Fluenz des Laserlichts sollte mindestens so groß sein, dass eine Ablation bzw. Umlagerung des Materials möglich ist. Die Fluenz kann z.B. so gewählt werden, dass sie höchstens 20% von der Ablationsschwelle des verwendeten Materials der Separatorplatte abweicht. Die Fluenz stellt ein Maß für die Energiedichte der Laserpulse dar und wird in der Regel in $J/cm^2$ angegeben. Die Fluenz kann z.B. wenigstens 0,001, wenigstens 0,01 oder wenigstens 0,1 und/oder höchstens 10,0, höchstens 5,0 oder höchstens 2 $J/cm^2$ betragen. Die Wiederholfrequenz des Lasers kann z.B. wenigstens 100 kHz, vorzugsweise wenigstens 1 kHz, zum Beispiel wenigstens 10 kHz und/oder höchstens 1000 kHz, vorzugsweise höchstens 800 kHz betragen. Aufgrund der niedrigen Wiederholfrequenz ergeben sich hohe Totzeiten, so dass der Gesamtenergieeintrag begrenzt ist und nur die Oberflächenschicht modifiziert wird.

Zusammenfassend lässt sich aufgrund der kurzen Energiedeposition in einem Zeitbereich, der unterhalb der thermischen Relaxationszeit liegt, eine Modifizierung des Materials der Separatorplatte praktisch ohne mechanische oder thermische Schädigungen des Werkstücks erzielen ("kalte" Ablation). Damit können kleinste Strukturen (Sub-$\mu$m bis 100 $\mu$m) erzeugt werden, die im Wesentlichen nur durch die optischen Eigenschaften des Laserstrahls definiert sind.

Das Verfahren zur Herstellung der Separatorplatte kann außerdem folgenden Schritt aufweisen:

- Erzeugen von periodischen Oberflächenstrukturen auf der Separatorplatte durch die Laserstrahlung.

Die erste Passivierungsschicht ist in der Regel Bestandteil der periodischen Oberflächenstrukturen. Hierbei werden die periodischen Oberflächenstrukturen typischerweise innerhalb einer räumlich zusammenhängenden Projektion des jeweiligen Laserpulses auf die Separatorplatte erzeugt. Je Laserpuls kann eine Vielzahl von periodischen Oberflächenstrukturen erzeugt werden. Die Erzeugung von jeder periodischen Oberflächenstruktur durch den jeweiligen Laserpuls kann hierbei vor dem Auftreffen des nächsten Laserpulses abgeschlossen sein. Pro Laserpuls können mindestens 5 oder mindestens 10 oder mindestens 20 periodische Oberflächenstrukturen, also insbesondere Grabenstrukturen, erzeugt werden. Die periodischen Oberflächenstrukturen werden somit mit jedem Laserpuls innerhalb der vom jeweiligen Laserpuls bestrahlten, zusammenhängenden Oberfläche erzeugt und nicht etwa dadurch, dass die Separatorplatte in räumlich periodischer Weise abgetastet oder mit einem räumlich periodischen, nicht-zusammenhängenden Lichtmuster wie einem Beugungsmuster oder Interferenzmuster bestrahlt wird.

Die Oberflächenstrukturen besitzen üblicherweise die Form einer periodischen Grabenstruktur, deren Gestalt von den Prozessparametern abhängt. Mögliche Prozessparameter sind z.B. in Höhm 2014 offenbart. Ob hierbei sogenannte LIPSS entstehen, hängt von einer Reihe von Prozessparametern und deren Wechselwirkung ab, zu nennen sind in erster Linie Pulsenergie, Frequenz und Defokusierung des Laserstrahls.

Insbesondere können die periodischen Oberflächenstrukturen durch Wechselwirkung der einfallenden Laserstrahlung mit der bestrahlten Oberfläche erzeugt werden. Die Wechselwirkung führt zu einer räumlich modulierten Energieeinkopplung ins Material, welche zu den periodischen Oberflächenstrukturen führt. Hierbei entstehen die periodischen Oberflächenstrukturen typischerweise durch optische Interferenz der einfallenden Laserstrahlung mit einer durch den Laserpuls erzeugten elektromagnetischen Oberflächenwelle im Material der Separatorplatte.

Gemäß einer bevorzugten Ausführungsform ist die Laserstrahlung linear polarisiert. Typischerweise werden die Oberflächenstrukturen senkrecht zu einer Polarisationsrichtung der einfallenden Laserstrahlung ausgerichtet. Dies gilt insbesondere für Kernbereiche des bestrahlten Bereichs und insbesondere für Bereiche, die sich innerhalb der Korngrenzen des unbehandelten Blechs erstrecken. In Bereichen, die aneinandergrenzen, die aber von einer Korngrenze voneinander getrennt sind, können die Oberflächenstrukturen hingegen unterschiedlich orientiert sein. Eine mittlere räumliche Periode der Oberflächenstrukturen kann wenigstens 2%, vorzugsweise wenigstens 5%, insbesondere wenigstens 20% und/oder höchstens 200%, vorzugsweise höchstens 120% der verwendeten Laserwellenlänge betragen. Die Separatorplatte kann somit verschiedene Bereiche mit jeweils periodischer Strukturierung, aber unterschiedlicher Orientierung in den verschiedenen Bereichen aufweisen. Hierbei können die genannten Bereiche aneinander angrenzen.

Die am häufigsten auftretenden LIPSS werden in der Literatur als "Low-Spatial-Frequency-LIPSS" (LSFL) bezeichnet (s. Höhm 2014). LSFL besitzen eine Ausrichtung senkrecht zur Polarisation des Laserstrahls und eine Periode im Bereich der Wellenlänge des verwendeten Lasers. Durch den Einfallswinkel zur Oberfläche kann sowohl die Periode aufgrund der Projektion variiert werden als auch die Ausrichtung der LIPSS um einen Winkel von bis zu 90° gedreht werden. In der Literatur wurde berichtet, dass die Periode P von LSFL in der Größenordnung der Wellenlänge $\lambda$ der einfallenden Laserstrahlung liegt (vgl. Höhm 2014), d.h. es gilt zum Beispiel $P \approx \lambda$. Ein zweiter LIPSS-Typ, die sogenannten HSFL ("High Spatial Frequency LIPSS") weisen signifikant kleinere Perioden $P_{HSFL}$ auf, verglichen mit der Laserwellenlänge ($P_{HSFL} << \lambda$), Ihre Ausrichtung ist materialabhängig an die Polarisation der Strahlung gekoppelt und ist üblicherweise entweder parallel oder senkrecht dazu orientiert.

Gemäß einer Variante werden die Oberflächenstrukturen mittels eines einzigen Laserstrahls erzeugt. Mit dem Laserstrahl kann die Oberfläche der Separatorplatte sukzessive abgetastet werden. Der auf die Separatorplatte treffende Laserstrahl bzw. Laserpuls kann einen Strahldurchmesser oder eine kleinste laterale Ausdehnung von mindestens 20 $\mu$m, vorzugsweise mindestens 40 $\mu$m aufweisen. Mit anderen Worten kann die zusammenhängende Projektion des Laserstrahls auf die Separatorplatte, welche auch als Laserspot, Laserfleck oder Laserpunkt bezeichnet werden kann, den genannten Strahldurchmesser oder die genannte kleinste laterale Ausdehnung von mindestens 20 $\mu$m, vorzugsweise mindestens 40 $\mu$m, aufweisen. Bei der Verwendung eines Strichlasers oder Linienlasers hat der Laserstrich vorzugsweise eine Breite (kleinste laterale Ausdehnung) von mindestens 20 $\mu$m, insbesondere mindestens 40 $\mu$m.

In einer weiteren Ausführungsform werden mindestens zwei, insbesondere mindestens zwei linear polarisierte, Laserstrahlen überlagert. Durch die Überlagerung der Laserstrahlen kann ein Interferenzmuster gebildet werden. Es kann auch ein Beugungsmuster verwendet werden. Durch Verwendung des Interferenzmusters bzw. Beugungsmusters kann die Oberfläche der Separatorplatte schneller abgetastet werden als mit nur einem Laserstrahl. Insgesamt kann das Verfahren also deutlich schneller durchgeführt werden. Vorzugsweise wird zu diesem Zweck der Laserstrahl eines Lasers in zwei Teilstrahlen geteilt. Das Interferenzmuster bzw. Beugungsmuster umfasst dabei in der Regel mehrere räumlich nicht-zusammenhängende Lichtflecken. Hierbei sei angemerkt, dass die räumliche Periode der periodischen Oberflächenstrukturen nicht durch die räumliche Periode des Interferenz- bzw. Beugungsmusters der Laserstrahlung entsteht, sondern durch die Wechselwirkung des kurzen Laserpulses mit der Separatorplatte, s. auch oben. Insofern weicht die räumliche Periode der Oberflächenstrukturen von der räumlichen Periode des Interferenzmusters oder des Beugungsmusters der Laserstrahlung ab und ist in der Regel deutlich kleiner, z.B. 10-mal kleiner.

Das Verfahren zur Herstellung der Separatorplatte kann folgenden weiteren Schritt aufweisen: abschnittsweises Abtragen einer auf der Oberfläche einer Metalllage vorhandenen Beschichtung mittels einer zusätzlichen Laserbehandlung, insbesondere bei einer vollflächig beschichteten Metalllage. Hierfür kommt eine Abtragung mittels desselben Lasers in Frage, es kann alternativ auch ein anderer Laser für die Abtragung der Beschichtung verwendet werden. Die Laseroberflächenbehandlung zur Oberflächenstrukturierung erfolgt anschließend bevorzugt nur in dem von der Beschichtung befreiten Bereich der Metalllage, muss sich aber nicht über den gesamten befreiten Bereich erstrecken.

Es sei angemerkt, dass gemäß dem genannten Herstellungsverfahren die Schritte des Ausbildens des Strömungsfeldes und des Bestrahlens der Separatorplatte mittels des gepulsten Lasers vertauscht werden können. Es kann somit vorgesehen sein, dass die Laseroberflächenbehandlung der Separatorplatte vor oder nach dem Umformen des Blechs zum Strömungsfeld erfolgt. Das Strömungsfeld wird typischerweise durch Tiefziehen, Hydroformen oder Prägen der Separatorplatte geformt.

Das Verfahren kann insbesondere verwendet werden zur Herstellung einer der oben beschriebenen Separatorplatten. Merkmale, die nur in Bezug auf die Separatorplatte oder die Bipolarplatte oder das elektrochemische System genannt wurden, können auch für das Verfahren beansprucht werden und andersherum.

Außerdem wird gemäß einem vierten Aspekt ein Verfahren zur Charakterisierung einer Separatorplatte eines elektrochemischen Systems vorgestellt. Das Verfahren umfasst die Schritte:

- Bereitstellen einer metallischen Separatorplatte, welche einen ersten laseroberflächenbehandelten Bereich mit einer ersten Passivierungsschicht und einen zweiten Bereich mit einer nativen Passivierungsschicht aufweist,
- Bestimmen einer ersten Ladungsträgerdichte der ersten Passivierungsschicht,
- Bestimmen einer zweiten Ladungsträgerdichte der nativen Passivierungsschicht,
- Vergleichen der ersten Ladungsträgerdichte mit der zweiten Ladungsträgerdichte.

Außerdem wird gemäß einem fünften Aspekt ein Verfahren zur Charakterisierung einer Separatorplatte eines elektrochemischen Systems bereitgestellt. Das Verfahren umfasst die Schritte:

- Bereitstellen einer metallischen Separatorplatte, welche einen ersten laseroberflächenbehandelten Bereich mit einer ersten Passivierungsschicht aufweist,
- Bestimmen einer ersten Ladungsträgerdichte der ersten Passivierungsschicht,
- zumindest überwiegendes Abtragen der ersten Passivierungsschicht in einem Abschnitt,
- Wiederaufbau einer Passivierungsschicht in diesem Abschnitt,
- Bestimmen einer zweiten Ladungsträgerdichte der wiederaufgebauten Passivierungsschicht und
- Vergleichen der ersten Ladungsträgerdichte mit der zweiten Ladungsträgerdichte.

Die nachstehenden Ausführungsformen und Merkmale der Verfahren können sich auf das Verfahren gemäß dem dritten Aspekt, dem vierten Aspekt und dem fünften Aspekt beziehen, sofern nichts anders angegeben ist oder ersichtlich ist, dass ein bestimmtes Verfahren gemeint ist.

Es kann vorgesehen sein, dass das Abtragen der ersten Passivierungsschicht elektrochemisch erfolgt. In manchen Ausführungsformen erfolgt der Wiederaufbau der Passivierungsschicht in saurer Lösung, wie zum Beispiel schwefelsaurer Lösung. Ebenso ist ein Wiederaufbau der Passivierungsschicht in basischer Lösung möglich.

Die Ladungsträgerdichten können zum Beispiel mittels der oben beschriebenen Mott-Schottky-Analyse bestimmt werden.

Nachfolgend wird beispielhaft beschrieben, wie die erste Passivierungsschicht und die wiederaufgebaute Passivierungsschicht hinsichtlich ihrer Ladungsträgerdichten verglichen werden können.

Mit einer ersten Mott-Schottky-Analyse kann die erste Passivierungsschicht mit Bezug auf ihre Ladungsträgerdichten (N-Typ und P-Typ) charakterisiert werden. Anschließend wird bei einem angelegten Potential die erste Passivierungsschicht zumindest in einem Bereich der Separatorplatte elektrochemisch abgebaut, z.B. in einer Korrosionszelle. Vorzugsweise wird die erste Passivierungsschicht hierbei in dem genannten Bereich komplett abgebaut. Anschließend bildet sich eine neue Passivierungsschicht, z.B. in saurer Lösung, welche im Sinne dieser Schrift als wiederaufgebaute Passivierungsschicht aufgefasst werden kann. Mit einer zweiten Mott-Schottky-Analyse kann dann die wiederaufgebaute Passivierungsschicht mit Bezug auf ihre Ladungsträgerdichten (N-Typ oder P-Typ) charakterisiert werden. In einer bevorzugten Ausführungsform erfolgen die beiden Mott-Schottky-Analysen und das Abtragen der ersten Passivierungsschicht in der gleichen elektrochemischen Zelle.

Im Regelfall wird ein Oberflächeninhalt der ersten Passivierungsschicht mit einem Oberflächeninhalt der nativen Passivierungsschicht oder der wiederaufgebauten Passivierungsschicht verglichen. Wie oben angedeutet, sollen die zu vergleichenden Probenausschnitte hierbei eine gleiche Grundfläche haben. Insbesondere mittels AFM-Messungen, kann eine Morphologie der Oberfläche einer Probe bestimmt werden. Der jeweilige Oberflächeninhalt kann daher mittels AFM-Messungen bestimmt oder abgeschätzt werden.

Ausführungsbeispiele der Separatorplatte, der Bipolarplatte und des elektrochemischen Systems sind in den Figuren dargestellt und werden anhand der nachfolgenden Beschreibung näher erläutert. Es zeigen:

Fig. 1 schematisch eine perspektivische Ansicht eines elektrochemischen Systems mit einer Vielzahl von Bipolarplatten;

Fig. 2 schematisch zwei Bipolarplatten für ein elektrochemisches System der in Fig. 1 gezeigten Art und eine zwischen den Bipolarplatten angeordnete Membranelektrodeneinheit in perspektivischer Darstellung;

Fig. 3 eine Schnittdarstellung durch ein elektrochemisches System entlang einer in Fig. 2 dargestellten Schnittlinie A-A;

Fig. 4 schematisch eine Draufsicht eines Abschnitts einer Separatorplatte;

Fig. 5 schematisch eine Draufsicht eines Abschnitts einer weiteren Separatorplatte;

Fig. 6 schematisch eine Draufsicht eines Abschnitts einer weiteren Separatorplatte;

Fig. 7A schematisch einen Abschnitt einer Separatorplatte in perspektivischer Darstellung;

Fig. 7B Detail A der Fig. 7A;

Fig. 7C Detail B der Fig. 7A;

Fig. 7D schematisch eine Draufsicht des Abschnitts der Separatorplatte der Fig. 7A;

Fig. 7E schematisch einen Querschnitt der Separatorplatte entlang einer in Fig. 7D dargestellten Schnittlinie B-B;

Fig. 7F Detail D der Fig. 7D;

Fig. 7G Detail E der Fig. 7E;

Fig. 7H Detail C der Fig. 7D;

Fig. 8 Mott-Schottky-Messungen an einer laseroberflächenbehandelten Probe und an einer unbehandelten Probe.

Fig. 9 Oberflächenstruktur einer unbehandelten Probe;

Fig. 10 ortsaufgelöste Stromdichte einer unbehandelten Probe;

Fig. 11 Oberflächenstruktur einer laseroberflächenbehandelten Probe;

Fig. 12 ortsaufgelöste Stromdichte einer laseroberflächenbehandelten Probe;

Fig. 13 eine mikroskopische Aufnahme von periodischen Oberflächenstrukturen in Draufsicht;

Fig. 14 ein Detail der Fig. 13;

Fig. 15 eine mikroskopische Aufnahme von periodischen Oberflächenstrukturen in Draufsicht;

Fig. 16 schematisch ein Lasersystem zur Erzeugung von periodischen Oberflächenstrukturen in perspektivischer Darstellung;

Fig. 17 schematisch einen Querschnitt des Lasersystems der Fig. 16;

Fig. 18 ein Detail des Lasersystems der Figuren 16 und 17; und

Fig. 19 Mott-Schottky-Messungen der Fig. 8 mit hervorgehobenen Bereichen, in denen die P-Ladungsträgerdichte und die N-Ladungsträgerdichte bestimmt werden.

Hier und im Folgenden sind in verschiedenen Figuren wiederkehrende Merkmale jeweils mit denselben oder ähnlichen Bezugszeichen bezeichnet.

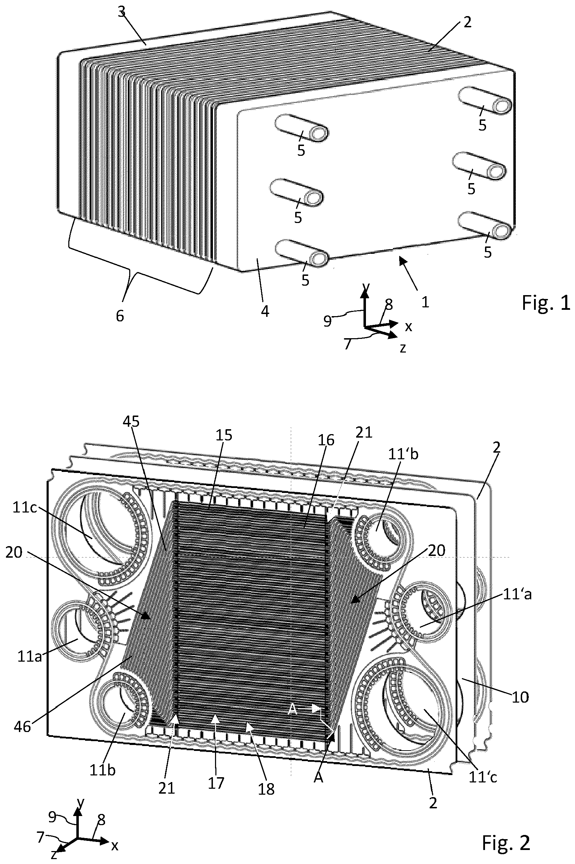

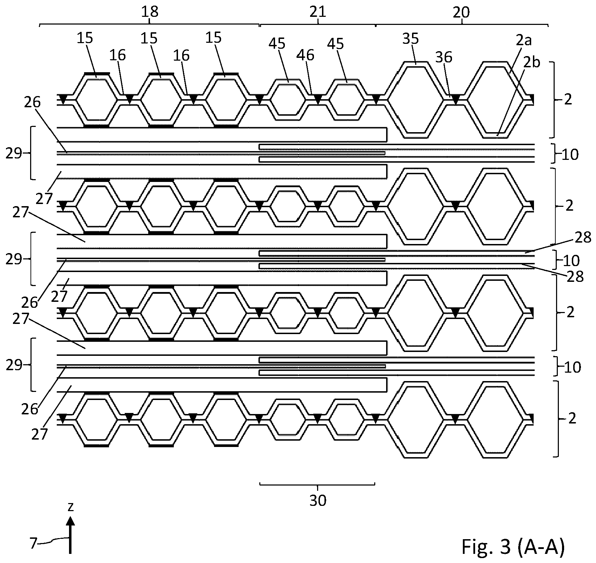

Fig. 1 zeigt ein elektrochemisches System 1 der hier vorgeschlagenen Art mit einer Mehrzahl von baugleichen metallischen Bipolarplatten 2, die in einem Stapel angeordnet und entlang einer z-Richtung 7 gestapelt sind. Die Bipolarplatten 2 des Stapels sind zwischen zwei Endplatten 3, 4 eingespannt. Die z-Richtung 7 wird auch Stapelrichtung genannt. Die Bipolarplatten 2 umfassen üblicherweise jeweils zwei miteinander verbundene metallische Separatorplatten 2a, 2b (siehe z. B. Figuren 2 und 3). Im vorliegenden Beispiel handelt es sich bei dem System 1 um einen Brennstoffzellenstapel. Je zwei benachbarte Bipolarplatten 2 des Stapels schließen also zwischen sich eine elektrochemische Zelle ein, die z. B. der Umwandlung von chemischer Energie in elektrische Energie dient. Die elektrochemischen Zellen weisen gewöhnlich jeweils eine Membranelektrodeneinheit (MEA) 10 auf (siehe z. B. Figuren 2 und 3). Die MEA beinhaltet typischerweise jeweils wenigstens eine Membran, z. B. eine Elektrolytmembran. Ferner kann auf einer oder beiden Oberflächen der MEA eine Gasdiffusionslage (GDL) angeordnet sein.

Bei alternativen Ausführungsformen kann das System 1 ebenso als Elektrolyseur, elektrochemischer Kompressor oder als Redox-Flow-Batterie ausgebildet sein. Bei diesen elektrochemischen Systemen können ebenfalls Bipolarplatten verwendet werden. Der Aufbau dieser Bipolarplatten kann dann dem Aufbau der hier näher erläuterten Bipolarplatten 2 entsprechen, auch wenn sich die auf bzw. durch die Bipolarplatten geführten Medien bei einem Elektrolyseur, bei einem elektrochemischen Kompressor oder bei einer Redox-Flow-Batterie jeweils von den für ein Brennstoffzellensystem verwendeten Medien unterscheiden können. Analoges gilt für die Separatorplatten.

Die z-Achse 7 spannt zusammen mit einer x-Achse 8 und einer y-Achse 9 ein rechtshändiges kartesisches Koordinatensystem auf. Die Bipolarplatten 2 bzw. Separatorplatten 2a, 2b definieren jeweils eine Plattenebene, wobei die Plattenebenen der Separatorplatten 2a, 2b jeweils parallel zur x-y-Ebene und damit senkrecht zur Stapelrichtung bzw. zur z-Achse 7 ausgerichtet sind. Die Endplatte 4 weist eine Vielzahl von Medienanschlüssen 5 auf, über die dem System 1 Medien zuführbar und über die Medien aus dem System 1 abführbar sind. Diese dem System 1 zuführbaren und aus dem System 1 abführbaren Medien können z. B. Brennstoffe wie molekularen Wasserstoff oder Methanol, Reaktionsgase wie Luft oder Sauerstoff, Reaktionsprodukte wie Wasserdampf oder abgereicherte Brennstoffe oder Kühlmittel wie Wasser und/oder Glykol umfassen.

Fig. 2 zeigt perspektivisch zwei aus dem Stand der Technik bekannte Bipolarplatten 2, wie sie beispielsweise in elektrochemischen Systemen der in Fig. 1 gezeigten Art eingesetzt werden können. Ferner zeigt Fig. 2 eine zwischen diesen benachbarten Bipolarplatten 2 angeordnete Membranelektrodeneinheit (MEA) 10, wobei die MEA 10 in Fig. 2 zum größten Teil durch die dem Betrachter zugewandte Bipolarplatte 2 verdeckt ist. Die Bipolarplatte 2 ist aus zwei stoffschlüssig zusammengefügten Einzelplatten, nämlich Separatorplatten 2a, 2b, gebildet (siehe z. B. Figur 3), von denen in Fig. 2 jeweils nur die dem Betrachter zugewandte erste Einzelplatte sichtbar ist, die die zweite Einzelplatte verdeckt. Die Einzelplatten können jeweils aus einem umgeformten Metallblech gebildet sein, z. B. aus einem geprägten oder tiefgezogenen Edelstahlblech. Dieses Metallblech kann z. B. eine Dicke von höchstens 150 $\mu$m, vorzugsweise von höchstens 100 $\mu$m, vorzugsweise von höchstens 90 $\mu$m, besonders vorzugsweise von höchstens 80 $\mu$m haben. Die Einzelplatten können miteinander verschweißt sein, beispielsweise durch Laserschweißverbindungen.

Die Einzelplatten weisen meistens miteinander fluchtende Durchgangsöffnungen auf, die Durchgangsöffnungen 11a-c der Bipolarplatte 2 bilden. Bei Stapelung einer Mehrzahl von Bipolarplatten 2 bilden die Durchgangsöffnungen 11a-c, 11'a-c Medienkanäle, die sich in der Stapelrichtung 7 durch den Stapel des Systems 1 erstrecken (siehe Fig. 1). Typischerweise ist jeder der durch die Durchgangsöffnungen 11a-c, 11'a-c gebildeten Medienkanäle jeweils in Fluidverbindung mit einem der Anschlüsse 5 in der Endplatte 4 des Systems 1. Über die von den Durchgangsöffnungen 11a gebildeten Medienkanäle kann z. B. Kühlmittel in den Stapel eingeleitet und über die Durchgangsöffnungen 11'a aus dem Stapel abgeleitet werden. Die von den Durchgangsöffnungen 11b, 11c gebildeten Leitungen dagegen können zur Versorgung der elektrochemischen Zellen des Brennstoffzellenstapels des Systems 1 mit Brennstoff und mit Reaktionsgas ausgebildet sein, während die von den Durchgangsöffnungen 11'b, 11'c gebildeten Leitungen zum Ableiten der Reaktionsprodukte aus dem Stapel ausgebildet sein können.

Die ersten Separatorplatten weisen an ihrer dem Betrachter der Fig. 2 zugewandten Vorderseite ein Strömungsfeld 17 mit Strukturen zum Führen eines Reaktionsmediums entlang der Vorderseite der Separatorplatte auf. Der elektrochemisch aktive Bereich 18 bildet dabei einen Teil dieses Strömungsfelds 17. Diese Strukturen des elektrochemisch aktiven Bereichs 18 sind in Fig. 2 durch eine Vielzahl von Stegen 15 und zwischen den Stegen 15 verlaufenden und durch die Stege 15 begrenzten Kanälen 16 gegeben. Auf den Rückseiten der Kanäle, d.h. auf der gegenüberliegenden Oberfläche der Separatorplatte bilden sich Rückseiten-Stege 19 aus, in deren Bereich die Separatorplatten 2a, 2b aneinander anliegen. An der dem Betrachter der Fig. 2 zugewandten Vorderseite der Bipolarplatten 2 weisen die ersten Separatorplatten 2a zudem jeweils einen Verteil- und Sammelbereich 20 für Reaktionsmedium auf, dem auf der Rückseite der Separatorplatte 2a, also auf der Innenseite der Bipolarplatte 2, ein Verteil- und ein Sammelbereich für Kühlmittel gegenüberliegt (nicht sichtbar). Der Verteilbereich 20 umfasst Strukturen, die eingerichtet sind, ein ausgehend von einer ersten 11b der Durchgangsöffnungen 11a, 11b, 11c in den Verteilbereich 20 eingeleitetes Medium über den aktiven Bereich 18 zu verteilen, während der Sammelbereich 20 Strukturen umfasst, die eingerichtet sind, ein ausgehend vom aktiven Bereich 18 zu einer ersten 11'b der Durchgangsöffnungen 11'a, 11'b, 11'c hin strömendes Medium zu sammeln oder zu bündeln. Die Verteil- und Sammelbereiche 20 weisen hierzu Leitstrukturen auf, die in Fig. 2 durch Stege 35 und zwischen den Stegen 35 ausgebildete Kanäle 36 gegeben sind. Die Kanäle 16 sind vorzugsweise jeweils über die Kanäle 36 in Fluidverbindung mit der einer der Durchgangsöffnungen 11b, 11'b. Der elektrochemisch aktive Bereich 18 ist somit über die Verteil- und Sammelbereiche 20 in Fluidverbindung mit den Durchgangsöffnungen 11b, 11'b.

Die Strukturen des aktiven Bereichs 18 und die Leitstrukturen des Verteilbereichs 20 und des Sammelbereichs 20 sind jeweils einteilig mit den Separatorplatten 2a, 2b ausgebildet und in die Separatorplatten 2a, 2b eingeformt, z. B. in einem Präge-, Hydroforming- oder Tiefziehprozess. Dasselbe gilt gewöhnlich für die entsprechenden Leitstrukturen der zweiten Separatorplatten 2b. Die Leitstrukturen des Strömungsfeldes 17 können eine Vielzahl von Stegen 15 und gegebenenfalls zwischen den Stegen 15 ausgebildete Kanäle 16 im elektrochemisch aktiven Bereich 18 sowie eine Vielzahl von Stegen 35 und gegebenenfalls zwischen den Stegen 35 ausgebildeten Kanälen 36 im Verteil- und Sammelbereich 20 umfassen.

In Fig. 2 sind ferner zwei rechteckige Randbereiche 21 des Strömungsfeldes 17 hervorgehoben, die an den dem Verteil- bzw. Sammelbereich 20 zugewandten Enden des elektrochemisch aktiven Bereichs 18 angeordnet sind und sich in Längsrichtung über die gesamte Breite Strömungsfelds 17 erstrecken, hier quer zum Verlauf der Kanäle 16 des Strömungsfeldes 17. Im Stapel des Systems 1 dienen diese Randbereiche 21 jeweils der Aufnahme und Anlage eines verstärkten Bereichs der Membranelektrodeneinheiten (MEA) 10. Der Randbereich 21 wird im Folgenden als Übergangsbereich 21 bezeichnet. Wie in der Fig. 3 erkennbar, ist der Übergangsbereich 21 im Vergleich zum aktiven Bereich 18 (Strömungsfeld 17) und zum Verteil- oder Sammelbereich 20 abgesenkt, wodurch die Separatorplatte 2a, 2b bzw. die Bipolarplatte 2 ebenso wie die MEA 10 im Stapel eine optimale Verpressung aufweist. Mehr Details sind in der WO 2018/114819 A1 veröffentlicht, welche durch Referenzieren zum Bestandteil dieser Schrift gemacht wird.

Fig. 3 zeigt eine Schnittdarstellung eines Abschnitts des Stapels des elektrochemischen Systems 1 der Fig. 1. Der Stapel umfasst eine Mehrzahl von baugleichen Bipolarplatten 2 nach der Art der Bipolarplatte 2 gemäß der Fig. 2. Die Schnittebene ist senkrecht zu den Planflächenebenen der Bipolarplatten 2 bzw. der Separatorplatten 2a, 2b ausgerichtet und folgt der in Fig. 2 hervorgehobenen Linie A-A. Hervorgehoben sind insbesondere die aktiven Bereiche 18, die Übergangsbereiche 21 und die Verteil- oder Sammelbereiche 20 der Separatorplatten 2a, 2b bzw. Bipolarplatten 2.

Zwischen zwei benachbarten Bipolarplatten 2 des Stapels ist jeweils ein Membranverbund 29 angeordnet, der jeweils eine ein Ionomer und mindestens eine Katalysatorschicht umfassende Membranelektrode 26, beiderseits der Membranelektrode 26 angeordnete Gasdiffusionslagen 27 sowie beiderseits der Membranelektrode 26 abschnittsweise angeordnete Verstärkungslagen 28 aufweist. Die Membranelektrode 26 und die Verstärkungslagen 28 bilden zusammen die Membranelektrodeneinheit (MEA) 10. Nur der Übersichtlichkeit halber zeigt Fig. 3 den Stapel in einem Zustand, in dem die Bipolarplatten 2 und die Membranverbünde 29 entlang der z-Richtung 7, d. h. senkrecht zu den Planflächenebenen der Bipolarplatten 2 bzw. der Separatorplatten 2a, 2b, nicht vollständig verpresst sind.

Die Membranverbünde 29 umfassen im Bereich des Strömungsfeldes 17, d. h. im elektrochemisch aktiven Bereich 18 der Bipolarplatten 2, jeweils nur die Membranelektrode 26 und die beiderseits der Membranelektrode angeordneten Gasdiffusionslagen 27. Die Membranelektrode 26 weist dabei beidseitig eine Katalysatorbeschichtung auf. Im Bereich des Verteil- oder Sammelbereichs 20 umfassen die Membranverbünde 29 jeweils nur die beiden, üblicherweise miteinander verbundenen Verstärkungsschichten 28. Nur in dem dem Übergangsbereich 21 der Separatorplatten 2a, 2b entsprechenden Bereich haben die Membranverbünde 29 jeweils einen verstärkten Bereich 30, der jeweils die Membranelektrode 26, die beiderseits der Membranelektrode 26 angeordneten Verstärkungsschichten 28 und die beiderseits der Membranelektrode 26 und beiderseits der Verstärkungsschichten 28 angeordneten Gasdiffusionslagen 27 umfasst. Typischerweise bildet der verstärkte Bereich 30 des Membranverbundes 29 einen Rand des elektrochemisch aktiven Bereichs des Membranverbundes 29. Auch im Übergangsbereich 21 weisen die Separatorplatten Stege 45 mit zwischen den Stegen 45 ausgebildeten Kanälen 46 auf.

Die Separatorplatten 2a, 2b kontaktieren einander üblicherweise in Kontaktbereichen, die von den Rückseiten der Vertiefungen 16, 36, 46 gebildet werden, und liegen dort flächig aneinander an. Zur Verbesserung der elektrischen Leitfähigkeit bzw. Verringerung des Durchgangswiderstandes im aktiven Bereich 18 und ggf. auch im Übergangsbereich 21 sind die Separatorplatten 2a, 2b in der Regel dort mittels stoffschlüssiger Verbindungen wie Laserschweißverbindungen 24 verbunden. Im Verteilbereich 20 werden Laserschweißverbindung hingegen vorzugsweise eingesetzt, um ein lokales Aufblähen der Kanäle zu vermeiden, also die Volumina, die für den Fluidstrom zur Verfügung stehen, klar zu definieren. Die Laserschweißverbindungen 24 sind also beispielsweise im Strömungsfeld 17, insbesondere im elektrochemisch aktiven Bereich 18, im Übergangsbereich 21 und im Verteilbereich 20 vorgesehen, insbesondere in ihren Kontaktzonen bzw. Kontaktbereichen. Die Schweißverbindungen 24 können beispielsweise in x-Richtung (also parallel zur Kühlfluidströmungsrichtung) durchgängige Schweißnähte oder alternativ Steppnähte bilden, welche jeweils aneinander gereihte, insbesondere voneinander beabstandete, linienförmige Schweißabschnitte umfassen.

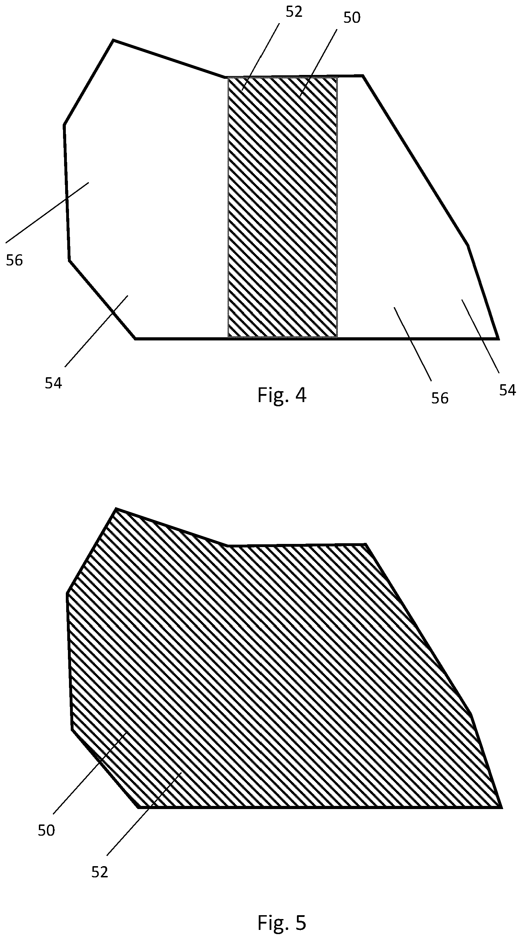

Ausführungsformen der Erfindung sollen zunächst unter Bezugnahme der Figuren 4-7 erläutert werden, welche jeweils Ausschnitte einer Separatorplatte 2a, 2b zeigen.

Die Separatorplatte 2a, 2b weist einen ersten laseroberflächenbehandelten Bereich 50 mit einer ersten Passivierungsschicht 52 auf. Im laseroberflächenbehandelten Bereich 50 wurde die Oberfläche der Separatorplatte 2a, 2b mit einem Ultrakurzpulslaser bestrahlt, wodurch eine erhöhte Ladungsträgerdichte in dem Bereich 50 bzw. in der ersten Passivierungsschicht 52 festgestellt werden konnte.

Außerdem umfasst die Separatorplatte 2a, 2b einen zweiten Bereich 54 mit einer nativen Passivierungsschicht 56, vgl. Fig. 4. Der zweite Bereich 54 wurde also nicht mit dem Ultrakurzpulslaser bestrahlt und hat keine Laseroberflächenbehandlung erfahren. Die native Passivierungsschicht 56 kann als Passivierungsschicht aufgefasst werden, welche entsteht, wenn blankes Metall an der Oberfläche oxidiert, in der Regel durch eine Reaktion mit Sauerstoff und Wasserdampf aus der Umgebungsluft. Die native Passivierungsschicht 56 bildet sich in der Regel über die gesamte Fläche der Separatorplatte 2a, 2b und ist üblicherweise bereits auf dem Metallblech vorhanden, aus welchem die Separatorplatte 2a, 2b geformt wird. Die Laseroberflächenbehandlung im ersten Bereich 50 der Separatorplatte 2a, 2b erfolgt somit typischerweise auf der nativen Passivierungsschicht 56, wodurch die elektrochemischen und physikalischen Eigenschaften der nativen Passivierungsschicht 56 geändert werden.

Insbesondere hat sich herausgestellt, dass die erste Passivierungsschicht 52 in Bezug auf die native Passivierungsschicht 56 infolge der Laseroberflächenbehandlung eine um mindestens 10% erhöhte Ladungsträgerdichte und

einen um höchstens 5 % größeren Oberflächeninhalt aufweist.

Während die Separatorplatte 2a, 2b der Fig. 4 lediglich im ersten Bereich 50 laseroberflächenbehandelt wurde, ist in der Fig. 5 zu erkennen, dass die gesamte Fläche der Separatorplatte 2a, 2b der Laseroberflächenbehandlung unterzogen wurde. Die erste Passivierungsschicht 52 erstreckt sich somit über die gesamte Fläche der Separatorplatte 2a, 2b der Fig. 5.

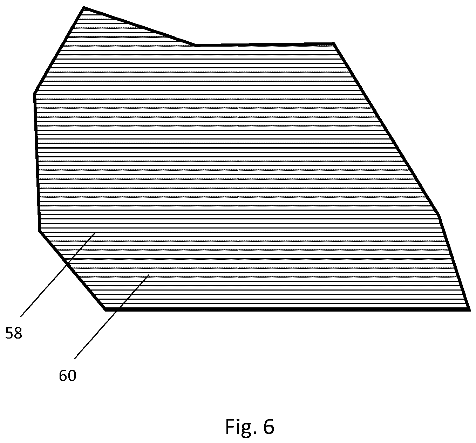

Bei der Separatorplatte 2a, 2b der Fig. 5 wurde die erste Passivierungsschicht 52, welche infolge der Laseroberflächenbehandlung ausgebildet ist, zumindest in Abschnitt 58 abgetragen, vgl. Fig. 6. Die Abtragung der ersten Passivierungsschicht 52 erfolgte elektrochemisch durch Anlegen einer Spannung in einer elektrochemischen Zelle. Vorzugsweise wird die erste Passivierungsschicht 52 komplett abgetragen, sie kann aber auch zumindest überwiegend entfernt werden. Anschließend bildet sich eine wiederaufgebaute Passivierungsschicht 60 heraus. Um den Aufbau der Passivierungsschicht 60 zu beschleunigen, kann die Platte 2a, 2b mit einer Säure behandelt werden. Ebenso ist eine Behandlung mittels Lauge zum beschleunigten Wiederaufbau einer Passivierungsschicht 60 möglich. Alternativ kann auch gewartet werden, bis sich die Passivierungsschicht 60 spontan herausbildet. Die erste Passivierungsschicht 52 weist infolge der Laseroberflächenbehandlung eine um mindestens 10% erhöhte Ladungsträgerdichte und einen um höchstens 5 % größeren Oberflächeninhalt in Bezug auf die wiederaufgebaute Passivierungsschicht 60 auf.

Für die Bestimmung der Ladungsträgerdichte in der ersten Passivierungsschicht 52, der nativen Passivierungsschicht 56 und der wiederaufgebauten Passivierungsschicht 60 kann eine Mott-Schottky-Analyse verwendet werden, wobei Details weiter unten beschrieben werden.

Es kann vorgesehen sein, dass die erste Passivierungsschicht 52 einen höheren Anteil an Metalloxid und/oder Metallhydroxid aufweist als die native Passivierungsschicht 56 oder die wiederaufgebaute Passivierungsschicht 60. Eine mögliche Erklärung für die erhöhte Ladungsträgerdichte in der ersten Passivierungsschicht 52 ist, dass die erste Passivierungsschicht 52 eine größere Dichte an Gitterdefekten, N-Ladungsträgern und/oder P-Ladungsträgern als die native Passivierungsschicht 56 bzw. die wiederaufgebaute Passivierungsschicht 60 aufweist.

Im laseroberflächenbehandelten Bereich 50 kann die Separatorplatte 2a, 2b periodische Oberflächenstrukturen 40 mit einer mittleren räumlichen Periode von kleiner als 10 $\mu$m aufweisen. Die erste Passivierungsschicht 52 kann zumindest einen Teil der Oberflächenstrukturen 40 bilden, nämlich deren oberste Schicht. Die Oberflächenstrukturen 40 können auch noch eine unmittelbar unter der ersten Passivierungsschicht 52 liegende Materialschicht umfassen, welche aus dem Metall der Separatorplatte 2a, 2b besteht.

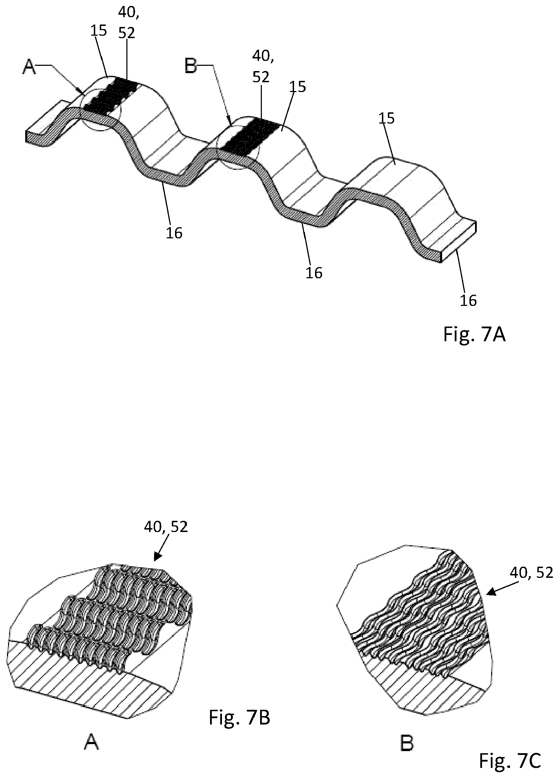

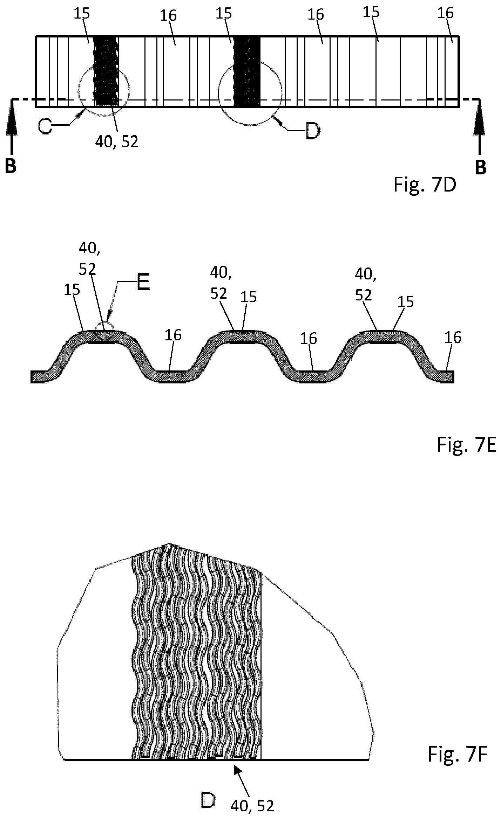

Die Oberflächenstrukturen 40 sind also in periodischen Abständen angeordnet. Die periodischen Oberflächenstrukturen 40 sind durch Bestrahlung mittels eines Ultrakurzpulslasers auf der Oberfläche der Separatorplatte 2a, 2b entstanden. Insbesondere kann/können ein zusammenhängender Bereich 50 oder mehrere zusammenhängende Bereiche der Separatorplatte 2a, 2b die periodischen Oberflächenstrukturen 40 aufweisen. Die periodischen Oberflächenstrukturen 40 sollen im Folgenden anhand der Figuren 7A bis 7H sowie Figuren 13-15 weiter erläutert werden.

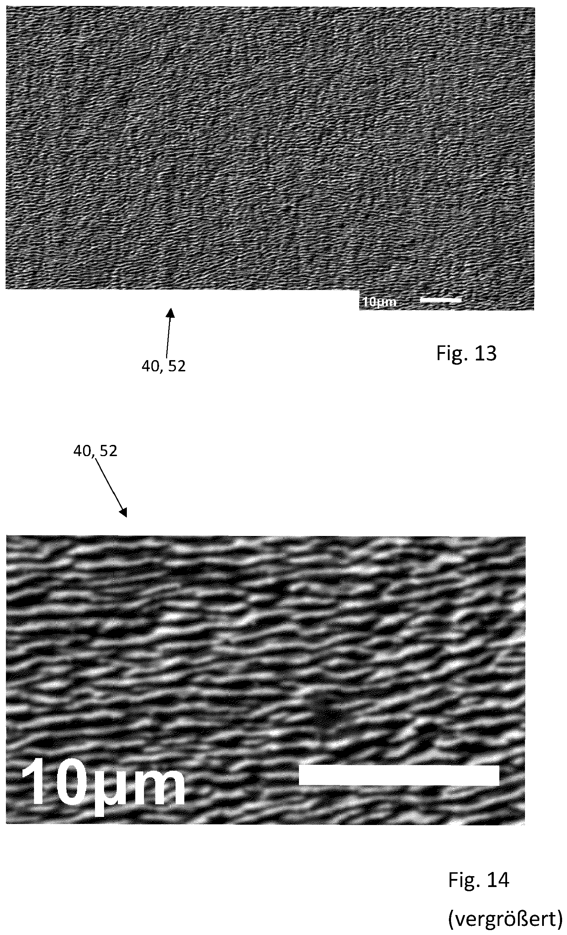

Die Figuren 13-15 zeigen stark vergrößerte Aufnahmen von periodischen Oberflächenstrukturen 40, welche auf der Oberfläche eines Metallblechs, wie eines Edelstahlblechs, durch eine Laseroberflächenbehandlung ausgebildet sind. Die vergrößerten Ausschnitte können Ausschnitte von Oberflächen einer Separatorplatte 2a, 2b oder eines Metallblechs für eine Separatorplatte 2a, 2b darstellen. Das Edelstahlblech kann anschließend durch Prägen, Hydroformen oder Tiefziehen zu einer Separatorplatte 2a, 2b geformt werden. Alternativ wird zunächst die Separatorplatte 2a, 2b durch Prägen, Hydroformen oder Tiefziehen ausgebildet und anschließend der Laseroberflächenbehandlung unterzogen, wodurch die den periodischen Oberflächenstrukturen 40 entstehen (vgl. das untenstehende Herstellungsverfahren).

Die Oberflächenstrukturen 40 können ein- und/oder beidseitig auf der Separatorplatte 2a, 2b vorhanden sein, d.h. auf der Kühlmittel- und/oder auf der Reaktionsmittelseite/Gasseite.

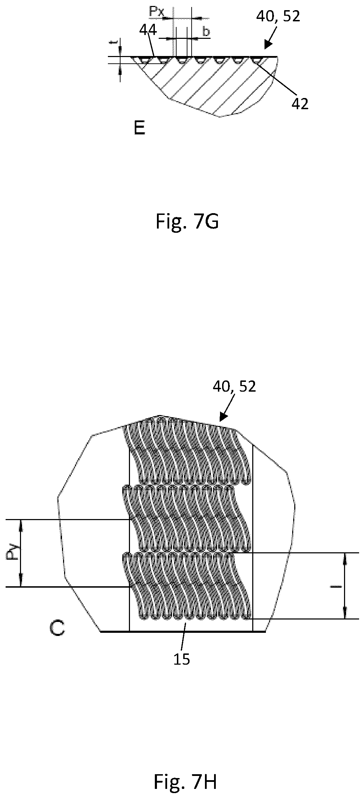

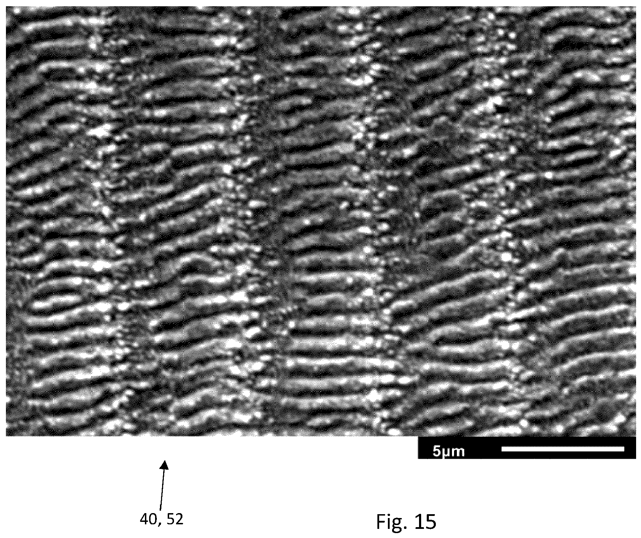

Wie aus den Figuren 7A-7H, 13-15 erkennbar, umfassen die periodischen Oberflächenstrukturen 40 (nachstehend: Oberflächenstrukturen 40) vorzugsweise eine Vielzahl von Vertiefungen 42 und Erhebungen 44. Die Vertiefungen 42 verlaufen zwischen den Erhebungen 44 und sind durch diese begrenzt und/oder gebildet. Die Oberflächenstrukturen 40 sind in zumindest einer Raumrichtung x, y periodisch zueinander angeordnet. So können die Oberflächenstrukturen 40 entlang ihrer Längsrichtung zueinander ausgerichtet sein. Zum Beispiel verlaufen die Oberflächenstrukturen 40, d.h. die Vertiefungen 42 und die Erhebungen 44, im Wesentlichen parallel zueinander. Die Oberflächenstrukturen 40 sind insbesondere parallel nebeneinander und/oder nacheinander angeordnet. Zum Beispiel ist in Fign. 7C, 7F zu erkennen, dass die Oberflächenstrukturen 40 parallel nebeneinander angeordnet sind, also senkrecht zur Längsrichtung der Oberflächenstrukturen. Des Weiteren ist in der Fig. 15 angedeutet, dass Oberflächenstrukturen 40 sowohl parallel hintereinander (in Längsrichtung nacheinander) als auch parallel nebeneinander angeordnet sind. Derartige Oberflächenstrukturen 40 sind ebenfalls in Figuren 7B und 7H erkennbar.

Die Oberflächenstrukturen 40 können sich entlang ihrer Längsrichtung zum Beispiel wellenförmig oder linienförmig erstrecken. Ein Beispiel einer wellenförmigen Erstreckung der Oberflächenstrukturen 40 ist in den Figuren 7C und 7F angedeutet.

In der Fig. 7G sind eine Tiefe t, eine Breite b und eine Periode Px der Oberflächenstrukturen, insbesondere der Vertiefungen 42, angedeutet. Die Oberflächenstrukturen 40 können eine Tiefe t von minimal 8 nm, bevorzugt minimal 50 nm und/oder maximal 3 $\mu$m, bevorzugt maximal 1 $\mu$m, insbesondere maximal 500 nm und/oder maximal 300 nm und/oder maximal 250 nm aufweisen. Im vorliegenden Beispiel beträgt sie z.B. t = 0,4 $\mu$m oder t = 100 nm. Eine Dicke der ersten Passivierungsschicht 52 beträgt hierbei weniger als 10 nm.

In einem Ausführungsbeispiel haben die Oberflächenstrukturen 40 eine Breite b von minimal 0,1 $\mu$m und/oder maximal 2 $\mu$m. Im vorliegenden Beispiel beträgt sie b = 0,45 $\mu$m. Außerdem können die Oberflächenstrukturen 40 eine Periode Px in einer Raumrichtung x von minimal 0,3 $\mu$m und/oder maximal 3 $\mu$m aufweisen. Im vorliegenden Beispiel beträgt sie 1 $\mu$m. Die Periode Px bezeichnet in der Fig. 7G den lateralen Abstand zwischen zwei benachbarten Erhebungen 44.

In der Fig. 7H haben die Oberflächenstrukturen 40 eine Länge l von 5 $\mu$m in einer Raumrichtung y. Die Oberflächenstrukturen sind parallel hintereinander angeordnet mit einer Periode Py von 5 $\mu$m.

Wegen der Oberflächenstrukturen 40 hat die Oberfläche der Separatorplatte 2a, 2b chemische, elektrische und/oder mechanische Eigenschaften, die sich von Bereichen der Separatorplatte 2a, 2b ohne Oberflächenstrukturen 40 unterscheiden. Durch die Oberflächenstrukturen 40 kann zum Beispiel ein Sauerstoffanteil des Oberflächenmaterials der Separatorplatte 2a, 2b im Bereich der periodischen Oberflächenstrukturen 40 größer sein als außerhalb der periodischen Oberflächenstrukturen 40.

Zum Erzeugen des laseroberflächenbehandelten Bereichs 50 bzw. der ersten Passivierungsschicht 52 und, falls vorgesehen, der Oberflächenstrukturen 40, wird ein Verfahren verwendet, welches die folgenden Schritte aufweist:

- Bereitstellen einer metallischen Separatorplatte 2a, 2b,
- Bestrahlen zumindest eines ersten Bereichs 50 der Separatorplatte 2a, 2b mittels eines gepulsten Lasers, wobei eine Pulsdauer der Laserpulse kleiner als 100 ps, vorzugsweise kleiner als 50 ps ist,
- Bilden einer ersten Passivierungsschicht 52 im ersten Bereich 50 der Separatorplatte 2a, 2b nach der Bestrahlung.

Wie oben erläutert, hat der erste Bereich 50 vor der Bestrahlung eine native Passivierungsschicht 56. Durch die Bestrahlung der nativen Passivierungsschicht 56 mit den Ultrakurzpulsen, welche eine Pulslänge kleiner als 100 ps aufweisen, wird die native Passivierungsschicht 56 derart geändert, dass sich die Ladungsträgerdichte der resultierenden ersten Passivierungsschicht 52 um mindestens 10% erhöht, während sich der Oberflächeninhalt um höchstens 5% erhöht.

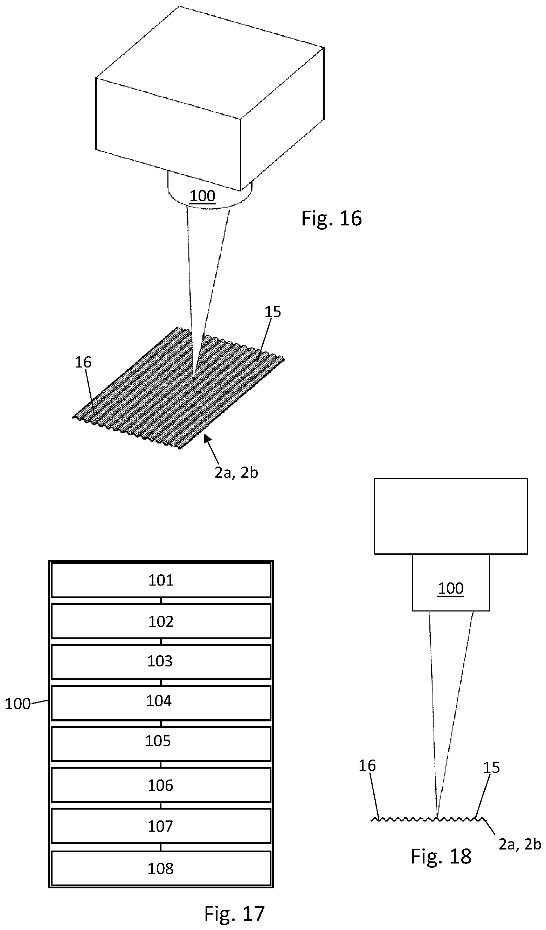

Das Verfahren kann beispielsweise mit einem in Figuren 16-18 gezeigten Laser 100 bzw. Lasersystem ausgeführt werden. Hierbei wird jeweils eine Laserbehandlung an einem bereits mit Kanälen 16 und Stegen 15 versehenen Ausschnitt einer Separatorplatte 2a oder 2b gezeigt. Die Behandlung könnte analog im Bereich der Rückseiten-Stege 19 und den sich zwischen diesen ausbildenden Kühlmittel-Kanälen erfolgen, d.h. auf der Kühlmittelseite der jeweiligen Separatorplatte 2a oder 2b. Figur 17 stellt einige bevorzugte Bestandteile des Lasers 100 dar, nämlich einen Laserkopf 101, einen ersten Spiegel 102, einen zweiten Spiegel 103, eine λ/2 Platte 104, einen Polarisator, insbesondere einen linearen Polarisator 105, einen Strahlteiler 106, einen Verschluss 107 sowie eine Linse 108. Selbstverständlich ist auch ein anderer Aufbau des Lasers 100 möglich.

Für das Verfahren wird insbesondere ein gepulster Laser 100 verwendet, wobei jeder Puls eine Pulsdauer von weniger als 1 ns, vorzugsweise weniger als 100 ps hat. Der Laser 100 kann also insbesondere ein Pikosekundenlaser (Pulsdauer kürzer als 1 ns und größer-gleich 1 ps) oder ein Femtosekundenlaser (Pulse kürzer als 1 ps, insbesondere kürzer als 500 fs und/oder größer-gleich 30 fs) sein. Der Laser 100 erzeugt vorzugsweise linear polarisierte Laserstrahlung. Ein Strahldurchmesser oder eine kleinste laterale Ausdehnung des Lasers parallel zur Oberfläche der Separatorplatte 2a, 2b kann z.B. mindestens 20 $\mu$m und/oder höchstens 2 mm sein, im gezeigten Beispiel etwa 60 $\mu$m. Die vom Laser 100 erzeugte Wellenlänge λ liegt beispielsweise zwischen 200 nm und 2000 nm, vorzugsweise zwischen 400 nm und 1500 nm. Übliche Wellenlängen sind z.B. 700 bis 1000 nm entsprechend einem Ti:Saphir-Lasersystem; 1064 nm (Grundwellenlänge) oder 532 nm, 355 nm oder 266 nm (Frequenzvervielfachung) entsprechend einem Nd:YAG-Lasersystem. Eine Fluenz des Lasers sollte in Abhängigkeit des Materials der Separatorplatte 2a, 2b gewählt werden und kann z.B. wenigstens 0,001, wenigstens 0,01 oder wenigstens 0,1 und/oder höchstens 10,0, höchstens 5,0 oder höchstens 2 J/cm$^2$ betragen. Die Wiederholfrequenz des Lasers kann z.B. wenigstens 10 Hz, vorzugsweise wenigstens 1 kHz und/oder höchstens 1000 kHz, vorzugsweise höchstens 20 kHz betragen.

Die Führung des Laserstrahls kann dabei, beispielsweise wenn nur der Bereich der Stege 16 oder der Rückseiten-Stege 19 behandelt wird, parallel zur Stegrichtung oder senkrecht zur Stegrichtung erfolgen oder aber auch unter einem hiervon abweichenden Winkel. Insbesondere kann bei der Laseroberflächenbehandlung der Rückseiten-Stege 19 zweier zu einer Bipolarplatte 2 zu fügenden Separatorplatten 2a, 2b die Führung des Lasers beispielsweise identisch, gegenläufig oder senkrecht zueinander erfolgen.

Das Verfahren kann den zusätzlichen Schritt aufweisen:

- Erzeugen von periodischen Oberflächenstrukturen 40 auf der Separatorplatte 2a, 2b durch die Laserstrahlung.

Höhm 2014 umfasst eine detaillierte Beschreibung der Wechselwirkung der Laserstrahlung mit Material zur Erzeugung von periodischen Oberflächenstrukturen 40, wobei in Höhm 2014 auch vorteilhafte Kombinationen von Laserparametern veröffentlicht sind. Aus diesem Grund wird hier auf eine weitere Beschreibung verzichtet.

Bereits vor dem Auftreffen des nächsten Laserpulses auf die Oberfläche der Separatorplatte 2a, 2b ist die Erzeugung dieser Vielzahl von periodischen Oberflächenstrukturen 40 abgeschlossen. Pro Laserpuls können zum Beispiel mindestens 10 oder mindestens 20 Oberflächenstrukturen, insbesondere Grabenstrukturen, erzeugt werden. Typischerweise werden die Oberflächenstrukturen 40 senkrecht zu der linearen Polarisationsrichtung der einfallenden Laserstrahlung ausgerichtet. Der Laser 100 kann also derart auf eine Oberfläche der Separatorplatte 2a, 2b gerichtet werden, dass Oberflächenstrukturen 40 mit einer gewünschten Ausrichtung entstehen. Dies gilt insbesondere für die Kernbereiche des bestrahlten Bereichs. Beim Auftreffen des Laserpulses auf die Oberfläche der Separatorplatte 2a, 2b interferiert die einfallende Laserstrahlung mit einer durch den Laserpuls erzeugten elektromagnetischen Oberflächenwelle im Oberflächenmaterial der Separatorplatte 2a, 2b. Diese Wechselwirkung hat zur Folge, dass sich die periodischen Oberflächenstrukturen 40 ausbilden.

Eine mittlere räumliche Periode Px der Oberflächenstrukturen 40 hängt in der Regel von der Wellenlänge λ des Lasers 100 ab. Für Metalle (Metallblech, Edelstahlblech) gilt hierbei näherungsweise, dass die Periode P in der Größenordnung der Wellenlänge λ liegt. Beispielsweise beträgt die mittlere räumliche Periode P der Oberflächenstrukturen 40 wenigstens 2%, vorzugsweise wenigstens 5%, insbesondere wenigstens 20% und/oder höchstens 200%, vorzugsweise höchstens 120% der verwendeten Laserwellenlänge.

Für die Erzeugung der Oberflächenstrukturen 40 reicht ein einziger Laserstrahl im Prinzip aus. Dieser Laserstrahl kann dann die zu behandelnde Oberfläche der Separatorplatte 2a, 2b abtasten. Hierbei wird die genannte Vielzahl der periodischen Oberflächenstrukturen mit jedem einzelnen Laserpuls innerhalb einer räumlichen Projektion der Laserstrahlung auf die Separatorplatte erzeugt. Das Verfahren kann beschleunigt werden, wenn durch mindestens zwei Laserstrahlen ein Interferenzmuster oder Beugungsmuster gebildet wird, und die Oberfläche mit dem Interferenzmuster abgetastet wird, um die Oberflächenstrukturen 40 zu erzeugen. Vorzugsweise wird hierzu ein linear polarisierter Laserstrahl des Lasers 100 über den Strahlteiler 106 geteilt. Die hierdurch erzeugten beiden linear polarisierten Teilstrahlen werden dann zur Bildung des Interferenzmusters genutzt. Das verwendete Interferenzmuster der Laserstrahlen dient nur dazu, die abgetastete Fläche zu vergrößern, und hat keinen direkten Einfluss auf die Periodizität von benachbarten Oberflächenstrukturen 40. Insofern weicht die räumliche Periode der Oberflächenstrukturen 40 von der räumlichen Periode des Interferenzmusters oder des Beugungsmusters ab und ist in der Regel deutlich kleiner, z.B. 10-mal kleiner. Allerdings haben Vergleichsmessungen gezeigt, dass mittels dieser beschleunigt aufgebrachten Oberflächenstrukturierung der Durchgangswiderstand nicht in dem Maße reduziert werden kann als mittels nur eines einzigen Laserstrahls. Alternativ oder zusätzlich kann auch ein Strichlaser (auch Linienlaser genannt) verwendet werden, wobei dessen Laserstrich vorzugsweise eine Breite von mindestens 20 μm aufweist.

Vorzugsweise werden zumindest die Stege 15 und/oder die Rückseiten-Stege 19 der Separatorplatte 2a, 2b mit dem Laser 100 bestrahlt, wodurch die Oberflächenstrukturen 40 auf den Stegen 15 und/oder auf den Rückseiten-Stegen 19 gebildet werden. Hierbei können die Stege 15 bzw. Rückseiten-Stege 19 und/oder der elektrochemisch aktive Bereich 18 des Strömungsfelds 17 entweder vor der Laserbehandlung oder nach der Laserbehandlung geformt werden. Das heißt, die hierzu erforderlichen Umformungsschritte des flachen Edelstahlblechs zur Bildung der Separatorplatte 2a, 2b, wie Tiefziehen oder Prägen, erfolgen vor oder nach dem Bestrahlen mittels des Lasers 100.

Es kann eine Beschichtung auf die Separatorplatte 2a, 2b aufgebracht werden bzw. ein von vornherein vollflächig beschichtetes Blechmaterial verwendet werden, z.B. zur Langzeitstabilität der Separatorplatte 2a, 2b. Die Beschichtung kann eine Dicke von mindestens 10 nm und/oder höchstens 100 μm, vorzugsweise von mindestens 50 nm und/oder höchstens 50 μm aufweisen. Für mögliche Materialien der Beschichtung wird auf die obigen Materialien verwiesen. Die Beschichtung kann ein thermoplastisches oder duroplastisches Bindemittel zum Auftragen der Beschichtung auf die Separatorplatte in flüssiger Form enthalten. Die vollflächige Beschichtung kann in einem zusätzlichen Schritt abschnittsweise abgetragen werden. Hierzu kann der Laser 100 oder alternativ ein weiterer Laser verwendet werden, der ausgestaltet ist, Material der Beschichtung abzutragen. Anschließend kann der freigelegte Oberflächenabschnitt zumindest abschnittsweise mittels Ultrakurzpulslasers behandelt werden und mit Oberflächenstrukturen versehen werden.

Die in dieser Schrift diskutierte erste Passivierungsschicht 52 und die Oberflächenstrukturen 40 können zu einer erheblichen Verringerung des elektrischen Kontaktwiderstandes bzw. zu einer erheblichen Steigerung der elektrischen Leitfähigkeit führen, beispielsweise an den Kontaktflächen der Außenseiten 22 der Bipolarplatte 2, d.h. insbesondere auf den Stegen 15.

Durch diese Verbesserung der elektrischen Leitfähigkeit kann, wenn die erste Passivierungsschicht oder die Oberflächenstrukturierung 40 an den Kontaktflächen der Separatorplatten 2a, 2b zueinander, d.h. den Rückseiten-Stegen 19, vorhanden ist, auf die Laserschweißabschnitte 24 in den Kontaktzonen auf der Kühlmittelseite der Separatorplatten 2a, 2b verzichtet werden. Somit kann die Bipolarplatte 2 in einer Ausführungsform innerhalb des Strömungsfeldes 17 bzw. innerhalb des elektrochemisch aktiven Bereichs 18 und in den genannten Kontaktzonen der beiden Separatorplatten 2a, 2b auf der Kühlmittelseite, wo die erste Passivierungsschicht 52 bzw. die Oberflächenstrukturen 40 angeordnet sind, frei von stoffschlüssigen Verbindungen wie Laserschweißverbindungen sein.

Zur Charakterisierung der Separatorplatte 2a, 2b der Fig. 4 kann ein Verfahren mit den folgenden Schritten verwendet werden:

- Bereitstellen einer Separatorplatte 2a, 2b, welche einen ersten laseroberflächenbehandelten Bereich 50 mit einer ersten Passivierungsschicht 52 und einen zweiten Bereich 54 mit einer nativen Passivierungsschicht 56 aufweist,
- Bestimmen einer ersten Ladungsträgerdichte der ersten Passivierungsschicht 52,
- Bestimmen einer zweiten Ladungsträgerdichte der nativen Passivierungsschicht 56,
- Vergleichen der ersten Ladungsträgerdichte mit der zweiten Ladungsträgerdichte.

Zur Charakterisierung der Separatorplatte 2a, 2b der Fig. 5 kann ein Verfahren mit den folgenden Schritten verwendet werden:

- Bereitstellen einer Separatorplatte 2a, 2b, welche eine erste Passivierungsschicht 52 aufweist,
- Bestimmen einer ersten Ladungsträgerdichte der ersten Passivierungsschicht 52,
- Abtragen der ersten Passivierungsschicht 52,
- Wiederaufbau einer Passivierungsschicht 60 (vgl. Fig. 6),
- Bestimmen einer zweiten Ladungsträgerdichte der wiederaufgebauten Passivierungsschicht 60,
- Vergleichen der ersten Ladungsträgerdichte mit der zweiten Ladungsträgerdichte.

Oftmals erfolgt der Wiederaufbau der Passivierungsschicht 60 in schwefelsaurer Lösung. Weiter kann das Abtragen der ersten Passivierungsschicht 52 in dem Abschnitt 58 elektrochemisch erfolgen.

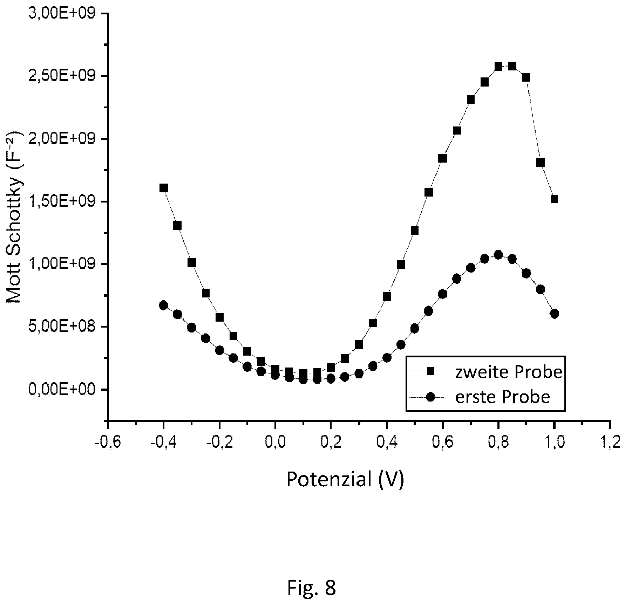

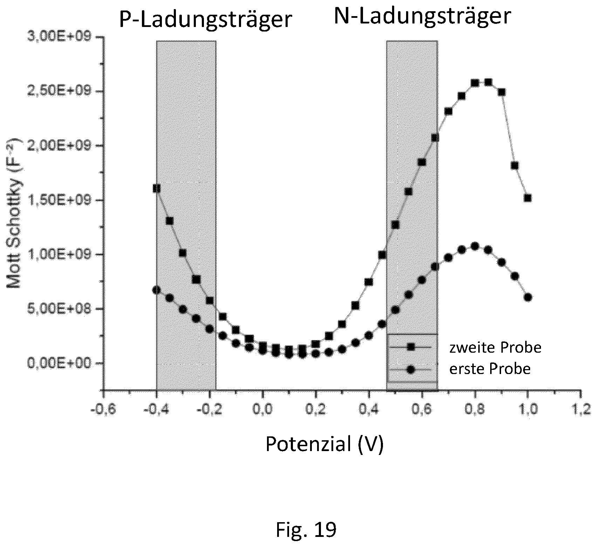

In der Fig. 8 und der Fig. 19 sind Vergleichsmessungen an einer laseroberflächenbehandelten ersten Probe mit einer ersten Passivierungsschicht 52, z.B. gemäß der Fig. 5, und an einer zweiten Probe mit einer wiederaufgebauten Passivierungsschicht 60, zum Beispiel gemäß der Fig. 6, gezeigt. Beide Proben wurden mittels einer Mott-Schottky-Analyse untersucht. Vor der Mott-Schottky Impedanzaufnahme wird oftmals mehrere Stunden, zum Beispiel 16 Stunden, eine OCP (englisch: open circuit potential) Ruhepotential-Messung durchgeführt. Hierfür wurde eine Mott-Schottky-Versuchsanordnung mit einer elektrochemischen Zelle, einer Arbeitselektrode, einer Gegenelektrode sowie einer Referenzelektrode verwendet. Eine derartige Anordnung wird auch Drei-Elektrodenaufbau genannt. Die elektrochemische Zelle wird dann mit einem Wechselspannungspotential mit fester Frequenz und kleinen Signalen angeregt. Eine derartige Mott-Schottky-Versuchsanordnung ist aus dem Stand der Technik bekannt, s. zum Beispiel die Veröffentlichung Schmickler, Wolfgang, Santos, Elizabeth " Interfacial Electrochemistry", Springer, 2010, weshalb auf eine weitere detaillierte Beschreibung der Mott-Schottky-Versuchsanordnung hier verzichtet wird. Als Versuchsparameter der Mott-Schottky-Analyse kommen zum Beispiel die folgenden Parameter in Frage:

Elektrolyt: Schwefelsäure, pH 2, 20 ppm Fluorid, insbesondere Kaliumfluorid
Versuchstemperatur: 25 °C
Frequenz Wechselspannung (Sinusspannung): 1 kHz
Amplitude Sinusspannung: 20 mV

Die Bestimmung der Ladungsträgerdichte der ersten Probe und der zweiten Probe erfolgt dabei unter Berücksichtigung einer Mott-Schottky-Analyse bzw. eines Mott-Schottky-Plotts. Mit der Mott-Schottky-Analyse werden generell Veränderungen gemessen, die an einer elektrochemischen Grenzfläche auftreten, wenn eine angelegte Gleichspannung geändert wird. So wird eine Impedanz bei verschiedenen Potenzialwerten gemessen und gemäß der oben beschriebenen Mott-Schottky-Gleichung (1) graphisch dargestellt. Durch Analyse des Anstiegs m der obigen Gleichung (2) kann dann die Ladungsträgerdichte $N_D$ bestimmt werden. Abhängig davon, ob die Probe N-Ladungsträger und P-Ladungsträger aufweist, ist die Steigung der Gerade positiv (für N-Ladungsträger) oder negativ (für P-Ladungsträger).

Zunächst wurde die erste Probe mittels der Mott-Schottky-Methode analysiert. Die erste Probe umfasst hierbei eine Platte aus Edelstahl des Typs 1.4404 mit einer laservorbehandelten ersten Passivierungsschicht 52. Anschließend wurde die erste Passivierungsschicht 52 der ersten Probe in der elektrochemischen Zelle durch eine Polarisation von -400 mV komplett elektrochemisch abgetragen. Da sich die Probe in saurer Lösung befindet, bildet sich nach Abschalten der Polarisation eine neue Passivierungsschicht auf der Oberfläche des Edelstahls, welche in dieser Schrift als wiederaufgebaute Passivierungsschicht 60 bezeichnet wird. Die zweite Probe wird im Folgenden als die Edelstahlplatte mit der wiederaufgebauten Passivierungsschicht 60 verstanden. Alternativ kann die zweite Probe auch als ein anderer Ausschnitt, nämlich ein nicht-laserbehandelter Ausschnitt, derselben Edelstahlplatte gebildet sein als die erste Probe. In diesem Fall kann die zweite Probe statt der wiederaufgebauten Passivierungsschicht 60 eine native Passivierungsschicht 56 aufweisen. Nach dem Ausbilden der wiederaufgebauten Passivierungsschicht 60 wird die zweite Probe mittels der Mott-Schottky-Methode analysiert.

Wie oben angedeutet ist die Platte der verwendeten Proben aus Edelstahl gefertigt. Edelstahl weist unter anderem Chrom und Eisen auf, sodass die entsprechende Passivierungsschicht 52, 56, 60 Chromoxid und Eisenoxid enthält, und somit als Doppelschicht aufgefasst werden kann. Aus diesem Grund umfasst die jeweilige Passivierungsschicht 52, 56, 60 sowohl N-Ladungsträger als auch P-Ladungsträger. In Chromoxid sind nämlich in der Regel P-Ladungsträger vorhanden, während Eisenoxid üblicherweise N-Ladungsträger aufweist. Dadurch, dass in den Proben beide Ladungsträgertypen vorhanden sind, haben die Mott-Schottky-Plots der Fig. 8 anstelle eines geraden Verlaufs einen relativ komplexen Verlauf. Es können aber in jedem Plot zwei Bereiche mit einem geraden Verlauf definiert werden, welche für die Bestimmung der P-Ladungsträgerdichte und der N-Ladungsträgerdichte herangezogen werden können. Diese Bereiche sind beispielhaft in der Fig. 19 für die jeweiligen P-Ladungsträger und die N-Ladungsträger durch Schraffierungen angedeutet. Der einzige Unterschied zwischen der Fig. 8 und der Fig. 19 sind somit die schraffierten Bereiche. Hierbei sind die P-Ladungsträgerdichte durch eine negative Steigung und die N-Ladungsträgerdichte durch eine positive Steigung des Mott-Schottky-Plots charakterisiert. Gemäß der Gleichung (2) sind die Ladungsträgerdichte $N_D$ und die Steigung des Mott-Schottky-Plots umgekehrt proportional zueinander.

Zu erkennen ist in Fig. 8, dass der Plot der ersten Probe im Bereich zwischen 0,4 V und 0,7 V eine geringere Steigung hat als der Plot der zweiten Probe, welche in diesem Bereich eine deutlich größere Steigung hat. Entsprechend ist auch der Plot der ersten Probe im Bereich zwischen -0,4 V und -0,2 V steiler als der Plot der zweiten Probe im gleichen Bereich.

Die erste Probe hat somit sowohl eine größere P-Ladungsträgerdichte (vgl. Plots im Bereich zwischen -0,4 V und -0,2 V) als auch eine größere N-Ladungsträgerdichte (vgl. Plots im Bereich zwischen 0,4 V und 0,7 V) in der Oberflächenschicht als die zweite Probe. Für die P-Ladungsträger wurde ein Verhältnis von Ladungsträgerdichte in der ersten Passivierungsschicht 52 zu Ladungsträgerdichte in der wiederaufgebauten Passivierungsschicht 60 von 3,0 gemessen. Für die N-Ladungsträger wurde ein Verhältnis von Ladungsträgerdichte in der ersten Passivierungsschicht 52 zu Ladungsträgerdichte in der wiederaufgebauten Passivierungsschicht 60 von 2,1 gemessen. Mit anderen Worten ist insgesamt die kombinierte Ladungsträgerdichte $N_D$ (P und N) in der ersten Passivierungsschicht 52 der ersten Probe größer als die Ladungsträgerdichte in der wiederaufgebauten Passivierungsschicht 60 der zweiten Probe. An denselben Proben wurde bezüglich des Oberflächeninhalts mittels AFM-Messung hingegen nur eine Zunahme um 1,5% gemessen.

Beispielhafte ermittelte Ladungsträgerdichten $N_P$ und $N_N$ von verschiedenen Proben A-C sind in den nachfolgenden Tabellen 1-3 beschrieben. Probe A hat hierbei keine Laseroberflächenbehandlung erfahren und hat daher eine native Passivierungsschicht. Andererseits wurden die Proben B und C vollflächig mit Laserstrahlung behandelt, sodass diese eine erste Passivierungsschicht 52 aufweisen. Sämtliche Proben stammen aus demselben Blech-Coil, Probe A dient somit zum Vergleich mit Proben B und C.

Tabelle 1: Ladungsträgerdichten der Probe A

| Probe A: ohne Laserbehandlung | $N_P$ * $10^{21}$ cm$^{-3}$ | $N_N$ * $10^{21}$ cm$^{-3}$ |
|---|---|---|
| native Passivierungsschicht | 1,26 | 0,93 |

Tabelle 2: Ladungsträgerdichten der Probe B

| Probe B: mit Laserbehandlung | Np * $10^{21}$ cm$^{-3}$ | $N_N$ * $10^{21}$ cm$^{-3}$ |
|---|---|---|
| erste Passivierungsschicht | 5,71 | 3,65 |
| Nach Abtrag wiederaufgebaute Passivierungsschicht | 3,99 | 2,71 |
| Verhältnis erste Passivierungsschicht/wiederaufgebaute Passivierungsschicht | 1,4 | 1,3 |
| Verhältnis erste Passivierungsschicht/native Passivierungsschicht (Probe A) | 4,5 | 3,9 |

Tabelle 3: Ladungsträgerdichten der Probe C

| Probe C: mit Laserbehandlung | $N_P$ * $10^{21}$ cm$^{-3}$ | $N_N$ * $10^{21}$ cm$^{-3}$ |
|---|---|---|
| erste Passivierungsschicht | 4,22 | 2,44 |
| Nach Abtrag wiederaufgebaute Passivierungsschicht | 1,78 | 1,59 |
| Verhältnis erste Passivierungsschicht/wiederaufgebaute Passivierungsschicht | 2,4 | 1,5 |

(fortgesetzt)

| Probe C: mit Laserbehandlung | $N_P * 10^{21}$ cm$^{-3}$ | $N_N * 10^{21}$ cm$^{-3}$ |
|---|---|---|
| Verhältnis erste Passivierungsschicht/native Passivierungsschicht (Probe A) | 3,3 | 2,6 |

Sowohl in Probe B als auch in Probe C sind die Werte von $N_P$ und $N_N$ in der wiederaufgebauten Passivierungsschicht 60 niedriger als in der ersten Passivierungsschicht 52. Die Abnahme der Ladungsträgerdichten $N_P$ und $N_N$ kann mit einer geringeren Anzahl an Defekten in der wiederaufgebauten Passivierungsschicht 60 bzw. einer höheren Anzahl von Defekten in der laserbehandelten ersten Passivierungsschicht 52 erklärt werden. Noch deutlicher fällt das Verhältnis zwischen nativer Passivierungsschicht und erster Passivierungsschicht aus.

Der Oberflächeninhalt der Proben bzw. Passivierungsschichten 52, 56, 60 allein kann zum Beispiel mittels AFM-Messungen bestimmt oder abgeschätzt werden. Die leitfähige Rasterkraftmikroskopie (C-AFM) oder stromempfindliche Rasterkraftmikroskopie ist hingegen ein Verfahren der Rasterkraftmikroskopie, bei dem gleichzeitig die Topografie eines Materials und der elektrische Stromfluss am Kontaktpunkt der Spitze mit der Oberfläche der Probe vermessen werden. Eine Bestimmung des Oberflächeninhalts einer Probe ist mittels C-AFM üblicherweise nicht möglich.

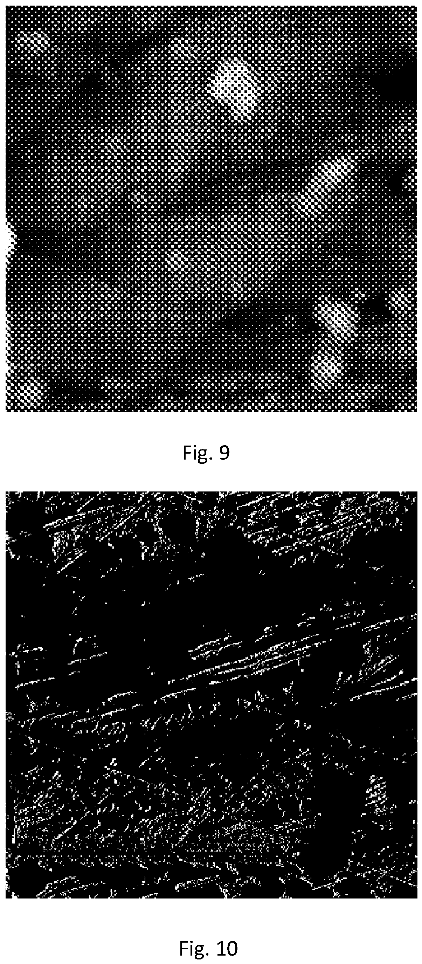

Die Fig. 9 zeigt eine Aufnahme einer Oberflächenstruktur einer unbehandelten Probe, welche mittels C-AFM-Messungen gemacht wurde. Hierbei repräsentieren helle Bereiche höherliegende Strukturen und dunkle Bereiche tieferliegende Strukturen. Die Fig. 10 zeigt eine ortsaufgelöste Stromdichte der unbehandelten Probe im gleichen Bereich der Fig. 9. Hierbei repräsentieren helle Bereiche hohe Stromdichten und dunkle Bereiche niedrige Stromdichten.

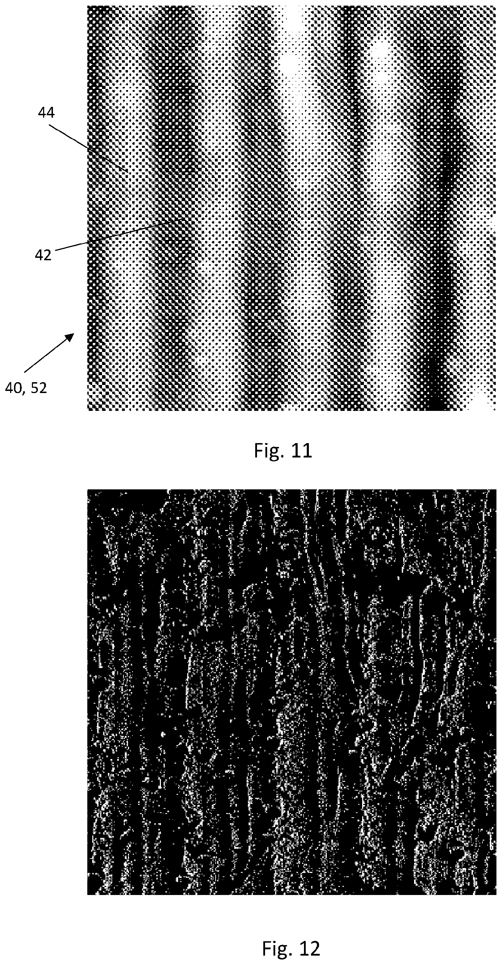

Die Fig. 11 zeigt eine Aufnahme einer Oberflächenstruktur einer laseroberflächenbehandelten Probe, welche mittels C-AFM-Messungen gemacht wurde. Hierbei repräsentieren helle Bereiche höhere Strukturen und dunkle Bereiche niedrige Strukturen. Die Fig. 12 zeigt eine ortsaufgelöste Stromdichte der laseroberflächenbehandelten Probe im gleichen Bereich der Fig. 11. Hierbei repräsentieren helle Bereiche hohe Stromdichten und dunkle Bereiche niedrige Stromdichten.

Die Figuren 9-12 zeigen jeweils Messbereiche von etwa 5 µm x 5 µm. Es sind signifikante Unterschiede zwischen der Probe der Fign. 9-10 und der Probe der Fign. 11-12 erkennbar. So ist in dem Höhenbild der Fig. 11 eine Grabenstruktur erkennbar, welche periodische Oberflächenstrukturen 40 mit Vertiefungen 42 und Erhebungen 44 aufweist. Im entsprechenden Strombild der Fig. 12 ist zu erkennen, dass maximal gemessene Stromdichten entlang der periodischen Oberflächenstrukturen 40 verlaufen. Die Oberfläche der unbehandelten Probe hingegen ist unstrukturiert, was sich zum einen in einem unregelmäßigen Höhenbild der Fig. 9 und zum anderen in dem entsprechend ungeordneten Strombild der Fig. 10 niederschlägt. Die mittlere gemessene Stromdichte in den C-AFM Messungen beträgt bei der unbehandelten Probe etwa 1,3 nA und bei der laseroberflächenbehandelten Probe etwa 2,1 nA . Somit ist die mittlere Stromdichte der laseroberflächenbehandelten Probe um etwa einen Faktor 1,6 größer als die mittlere Stromdichte der unbehandelten Probe.

Hiervon unabhängig stellte sich in AFM-Messungen heraus, dass der Oberflächeninhalt der laseroberflächenbehandelten Probe höchstens 5% größer ist als der Oberflächeninhalt der unbehandelten Probe. Beispielsweise kann der Oberflächeninhalt der zuvor genannten Proben mit dem folgenden Aufbau bestimmt werden:

Gerät: JPK NanoWizard BioAFM
Cantilever: OMCL-AC240-TS-R3 (Olympus, Si-Spitze, Radius der Spitze: 7 nm) Scan-Bereich: 100 µm x 100 µm, je nach Größe des laseroberflächenstrukturierten Bereichs wahlweise auch kleinere Bereiche, wobei eine Fläche von 10 µm x 10 µm nicht unterschritten werden sollte. Mit dem Tapping Mode sollte vorzugsweise in Walzrichtung gemessen werden.

Die reale Oberfläche kann hierbei zum Beispiel durch Triangulation der gemessenen Höhenwerte angenähert werden. Wie oben bereits erläutert, wird die unstrukturierte Oberfläche typischerweise als Referenz zur Berechnung der prozentualen Vergrößerung herangezogen.

Selbstverständlich können die oben beschriebenen Merkmale der Separatorplatte 2a, 2b und/oder der Verfahren miteinander kombiniert werden, sofern sie sich nicht gegenseitig ausschließen.

Bezugszeichenliste:

1        elektrochemisches System
2        Bipolarplatte
2a       Separatorplatte
2b       Separatorplatte

| | |
|---|---|
| 3 | Endplatte |
| 4 | Endplatte |
| 5 | Medienanschluss |
| 7 | z-Richtung |
| 8 | x-Richtung |
| 9 | y-Richtung |
| 10 | Membranelektrodeneinheit (MEA) |
| 11a | Durchgangsöffnung |
| 11b | Durchgangsöffnung |
| 11c | Durchgangsöffnung |
| 15 | Stege |
| 16 | Kanäle |
| 17 | Strömungsfeld |
| 18 | aktiver Bereich |
| 19 | Rückseiten-Stege |
| 20 | Verteil- oder Sammelbereich |
| 21 | Übergangsbereich |
| 22 | Außenseite der Bipolarplatte |
| 23 | Innenseite der Bipolarplatte |
| 24 | Laserschweißverbindungen |
| 25 | Beschichtung |
| 26 | Membranelektrode |
| 27 | Gasdiffusionslage |
| 28 | Verstärkungslage |
| 29 | Membranverbund |
| 30 | verstärkter Bereich |
| 35 | Stege des Verteil- oder Sammelbereichs |
| 36 | Kanäle des Verteil- oder Sammelbereichs |
| 40 | Oberflächenstrukturen |
| 42 | Vertiefung |
| 44 | Erhebung |
| 45 | Stege des Übergangsbereichs |
| 46 | Kanäle des Übergangsbereichs |
| 50 | laseroberflächenbehandelter erster Bereich |
| 52 | erste Passivierungsschicht |
| 54 | zweiter Bereich |
| 56 | native Passivierungsschicht |
| 58 | Abschnitt |
| 60 | wiederaufgebaute Passivierungsschicht |
| 100 | Lasersystem |
| 101 | Laserkopf |
| 102 | erster Spiegel |
| 103 | zweiter Spiegel |
| 104 | λ/2 Platte |
| 105 | Polarisator |
| 106 | Strahlteiler |
| 107 | Verschluss |
| 108 | Linse |
| b | Breite |
| t | Tiefe |
| l | Länge |
| Px | Periode in x-Richtung |
| Py | Periode in y-Richtung |

**Patentansprüche**

1. Metallische Separatorplatte (2a, 2b) für ein elektrochemisches System (1), aufweisend zumindest einen ersten laseroberflächenbehandelten Bereich (50) mit einer ersten Passivierungsschicht (52) und einen zweiten Bereich (54) mit einer nativen Passivierungsschicht (56), wobei die erste Passivierungsschicht (52) in Bezug auf die native Passivierungsschicht (56) infolge der Laseroberflächenbehandlung

- eine um mindestens 10% erhöhte Ladungsträgerdichte und
- einen um höchstens 5 % größeren Oberflächeninhalt

aufweist.

2. Metallische Separatorplatte (2a, 2b) für ein elektrochemisches System, aufweisend eine erste Passivierungsschicht (52), welche infolge einer Laseroberflächenbehandlung der Separatorplatte (2a, 2b) eine um mindestens 10% erhöhte Ladungsträgerdichte und einen um höchstens 5 % größeren Oberflächeninhalt in Bezug auf eine wiederaufgebaute Passivierungsschicht (60) aufweist, wobei vorzugsweise für die Bestimmung der erhöhten Ladungsträgerdichte der ersten Passivierungsschicht

- die Ladungsträgerdichte der ersten Passivierungsschicht (52) bestimmt wird, insbesondere mittels einer Mott-Schottky-Analyse,
- die erste Passivierungsschicht (52) zumindest in einem Abschnitt zumindest überwiegend abgetragen wird,
- eine Passivierungsschicht (60) in diesem Abschnitt wiederaufgebaut wird und
- die Ladungsträgerdichte der wiederaufgebauten Passivierungsschicht (60) bestimmt wird, insbesondere mittels einer Mott-Schottky-Analyse.

3. Separatorplatte (2a, 2b) nach einem der vorstehenden Ansprüche, wobei die erste Passivierungsschicht (52) einen höheren Anteil an Metalloxid und/oder Metallhydroxid aufweist als die native Passivierungsschicht (56) oder die wiederaufgebaute Passivierungsschicht (60).

4. Separatorplatte (2a, 2b) nach einem der vorstehenden Ansprüche, wobei die erste Passivierungsschicht (52) eine größere Dichte an Gitterdefekten, N-Ladungsträgern und/oder P-Ladungsträgern als die native Passivierungsschicht (56) oder die wiederaufgebaute Passivierungsschicht (60) aufweist.

5. Verfahren zur Herstellung einer Separatorplatte (2a, 2b) für ein elektrochemisches System (1), umfassend die Schritte:

- Bereitstellen einer metallischen Separatorplatte (2a, 2b),
- Bestrahlen zumindest eines ersten Bereichs der Separatorplatte (2a, 2b) mittels eines gepulsten Lasers, wobei eine Pulsdauer der Laserpulse kleiner als 100 ps, vorzugsweise kleiner als 50 ps ist,
- Bilden einer ersten Passivierungsschicht (52) im ersten Bereich der Separatorplatte (2a, 2b),

wobei die erste Passivierungsschicht (52) in Bezug auf eine native oder wiederaufgebaute Passivierungsschicht (56, 60)

∘ eine um mindestens 10% erhöhte Ladungsträgerdichte und
∘ einen um höchstens 5 % größeren Oberflächeninhalt der beiden Bereiche

aufweist.

6. Verfahren zur Charakterisierung einer Separatorplatte (2a, 2b) eines elektrochemischen Systems, umfassend die Schritte:

- Bereitstellen einer metallischen Separatorplatte (2a, 2b), welche einen ersten laseroberflächenbehandelten Bereich (50) mit einer ersten Passivierungsschicht (52) und einen zweiten Bereich (54) mit einer nativen Passivierungsschicht (56) aufweist,
- Bestimmen einer ersten Ladungsträgerdichte der ersten Passivierungsschicht (52),
- Bestimmen einer zweiten Ladungsträgerdichte der nativen Passivierungsschicht (54),
- Vergleichen der ersten Ladungsträgerdichte mit der zweiten Ladungsträgerdichte.

7. Verfahren nach Anspruch 6, wobei der zweite Bereich (54) keine Laseroberflächenbehandlung erfahren hat.

**8.** Verfahren zur Charakterisierung einer Separatorplatte (2a, 2b) eines elektrochemischen Systems, umfassend die Schritte:

- Bereitstellen einer metallischen Separatorplatte (2a, 2b), welche einen ersten laseroberflächenbehandelten Bereich (50) mit einer ersten Passivierungsschicht (52) aufweist,
- Bestimmen einer ersten Ladungsträgerdichte der ersten Passivierungsschicht (52),
- zumindest überwiegendes Abtragen der ersten Passivierungsschicht (52) in einem Abschnitt,
- Wiederaufbau einer Passivierungsschicht (60) in diesem Abschnitt,
- Bestimmen einer zweiten Ladungsträgerdichte der wiederaufgebauten Passivierungsschicht (60),
- Vergleichen der ersten Ladungsträgerdichte mit der zweiten Ladungsträgerdichte.

**9.** Verfahren nach Anspruch 8, wobei der Wiederaufbau der Passivierungsschicht (60) in saurer, insbesondere schwefelsaurer Lösung erfolgt.

**10.** Verfahren nach Anspruch 8 oder Anspruch 9, wobei das Abtragen der ersten Passivierungsschicht (52) elektrochemisch erfolgt.

**11.** Verfahren nach einem der Ansprüche 6-10, wobei die Ladungsträgerdichten mittels einer Mott-Schottky-Analyse bestimmt werden.

**12.** Verfahren nach einem der Ansprüche 6-11, wobei ein Oberflächeninhalt der ersten Passivierungsschicht (52) mit einem Oberflächeninhalt der nativen Passivierungsschicht (56) oder der wiederaufgebauten Passivierungsschicht (60) verglichen wird.

**13.** Verfahren nach dem vorstehenden Anspruch, wobei der jeweilige Oberflächeninhalt mittels AFM-Messungen bestimmt wird.

Fig. 1

Fig. 2

Fig. 3 (A-A)

52 50

56

54

Fig. 4

56 54

50

52

Fig. 5

58

60

Fig. 6

Fig. 7A

Fig. 7B

A

B

Fig. 7C

15  16  15  16  15  16

C  D

40, 52

B  B

Fig. 7D

40,
52
15  E  40,
52  15  40,
52  15

16  16  16

Fig. 7E

D  40, 52

Fig. 7F

Fig. 7G

Fig. 7H

Fig. 8

Fig. 9

Fig. 10

44

42

40, 52

Fig. 11

Fig. 12

40, 52

Fig. 13

40, 52

Fig. 14

(vergrößert)

40, 52

Fig. 15

Fig. 16

Fig. 17

Fig. 18

Fig. 19

Europäisches
Patentamt

European
Patent Office

Office européen
des brevets

# EUROPÄISCHER RECHERCHENBERICHT

**Nummer der Anmeldung**

**EP 22 19 4470**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,P | DE 10 2021 202214 A1 (REINZ DICHTUNG GMBH [DE]) 16. September 2021 (2021-09-16) * das ganze Dokument * ----- | 1-13 | INV. H01M8/0228 B23K26/0622 B23K26/352 |
| A | DE 10 2007 005232 A1 (FRAUNHOFER GES FORSCHUNG [DE]) 31. Juli 2008 (2008-07-31) * Absatz [0050] - Absatz [0057]; Ansprüche 1-25 * ----- | 1-13 | |
| A | US 2010/316936 A1 (DADHEECH GAYATRI VYAS [US] ET AL) 16. Dezember 2010 (2010-12-16) * Absatz [0048] - Absatz [0056] * ----- | 1-13 | |

**RECHERCHIERTE SACHGEBIETE (IPC)**

H01M
B23K

Der vorliegende Recherchenbericht wurde für alle Patentansprüche erstellt

| Recherchenort | Abschlußdatum der Recherche | Prüfer |
|---|---|---|
| München | 15. Februar 2023 | Wiedemann, Eric |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 4470

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-02-2023

| Im Recherchenbericht angeführtes Patentdokument | Datum der Veröffentlichung | Mitglied(er) der Patentfamilie | Datum der Veröffentlichung |
|---|---|---|---|
| DE 102021202214 A1 | 16-09-2021 | CN 113381036 A<br>DE 102021202214 A1<br>JP 2021144936 A<br>US 2021288336 A1 | 10-09-2021<br>16-09-2021<br>24-09-2021<br>16-09-2021 |
| DE 102007005232 A1 | 31-07-2008 | DE 102007005232 A1<br>WO 2008092700 A1 | 31-07-2008<br>07-08-2008 |
| US 2010316936 A1 | 16-12-2010 | DE 102007057699 A1<br>US 2007087176 A1<br>US 2010316936 A1 | 30-10-2008<br>19-04-2007<br>16-12-2010 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018114819 A1

**In der Beschreibung aufgeführte Nicht-Patentliteratur**

- **VERÖFFENTLICHUNG SCHMICKLER ; WOLFGANG ; SANTOS, ELIZABETH.** Interfacial Electrochemistry. Springer, 2010
- Dynamik der Erzeugung und Mechanismen der Entstehung von periodischen Oberflächenstrukturen im Nanometerbereich (LIPSS) durch die Bestrahlung von Festkörpern mit Femtosekunden-Laserpulsen. Dissertation von Sandra Höhm, Berlin. 2014
- **VERÖFFENTLICHUNG SCHMICKLER ; WOLFGANG ; SANTOS ; ELIZABETH.** Interfacial Electrochemistry. Springer, 2010